# EUROPEAN PATENT SPECIFICATION

(11) **EP 4 301 159 B1**
(45) Date of publication and mention of the grant of the patent: **30.09.2026**
(21) Application number: 22762730.4
(22) Date of filing: 28.02.2022
(51) Int. Cl.: A23K 50/90, A01K 67/30, A01N 63/16, A01N 63/14, A23K 10/20, A01P 7/02, A01P 15/00, A23K 10/37, A23K 40/00, A23K 40/30

(54) **FOOD SOURCE FOR BIOLOGICAL CONTROL AGENTS AND METHOD THEREOF**
NAHRUNGSMITTELQUELLE FÜR BIOLOGISCHE BEKÄMPFUNGSMITTEL UND VERFAHREN DAFÜR
SOURCE D'ALIMENT POUR AGENTS DE LUTTE BIOLOGIQUE ET PROCÉDÉ ASSOCIÉ

(30) Priority: 01.03.2021 US 202163155033 P
(43) Date of publication of application: 10.01.2024
(73) Proprietor: Bio-Bee Sde Eliyahu Ltd, 1081000 Emmek H'Maayanot (IL)
(72) Inventor: TABIC, Arnon, 1524700 Beit Keshet (IL); KATZ, Tom, 1513000 Kibbutz Degania B (IL); STEINBERG, Shimon, 3657600 Timrat (IL)
(74) Representative: Straus, Alexander
(86) International application number: PCT/IL2022/050222
(87) International publication number: WO 2022/185303

(56) References cited:
- EP-A1- 2 380 436
- EP-A2- 2 124 573
- WO-A1-2019/171374
- WO-A1-2019/171374
- WO-A1-2020/070334
- WO-A1-2021/044404
- US-A1- 2015 128 864

## Description

### FIELD OF THE INVENTION

The present invention relates to the field of biological control agents for crop protection, and more particularly to means and methods for rearing biological control agents against plant pests.

### BACKGROUND OF THE INVENTION

The use of arthropods (insects and mites) as Biological Control Agents (BCA) is an expanding field with many advantages over chemical pest control. Arthropod BCA's are able to naturally control other arthropod species that act as pests on the crop.

Natural enemies of mites include predators, parasitic insects, nematodes, and pathogens. Several species of Mesostigmata and Prostigmata predatory mites are effective biological control agents against several phytophagous mites and insects and also nematodes. Based on predator feeding habits, its biological characteristics can be affected by nutritional value of the prey. Hence, a cost for predator's mass production is a fundamental precondition, for the development of a biological control product for crop protection.

Publications have demonstrated the use of a predatory mite population in order to control pests. For example, phytoseiid predatory mites are employed to combat pests such as phytophagous mites, thrips and whiteflies. In addition, other predatory mite species selected from mesostigmatid and prostigmatid predatory species are used in biological pest control and some have entered market.

Usually, acarine biological control agents are introduced into compositions presented in sachets comprising predators together with food source allowing them to feed for a certain period, or in the form of bottles that allow variable amounts of predators to be placed on plants or on the ground. Predators then colonize crops, where they feed on target prey. For example, mites of the families Laelapidae and Phytoseiidae (Acari: Mesostigmata) are commonly used as biocontrol agents against pests in greenhouses. In mass production of predatory mites, stored product mites (Acari: Astigmata) are the most commonly used prey.

Mass rearing of predators is limited by the quality of the prey. Sometimes, the laboratory cultures of prey mites collapse and hence, the mass production of prey for predator rearing is delayed. Poor quality prey mites influence production of predators by decreasing predatory mite growth rate, increasing developmental time of predators due to nutrient deficiency, and reducing fitness of predators. Thus rearing diet strongly influences population growth, and optimization of diets is important in relation to population growth differences among the strains of mites and pathological effects caused by mite metabolites. In addition, pathogens including acaropathogenic bacteria, protozoa and fungi reduce prey mite fitness, cause the collapse of prey mite cultures and influence the robustness of the predatory mite population via its prey.

It is therefore an interest of developing effective mass rearing systems to produce predatory mite populations on a commercially relevant scale in a cost-effective way. For example, WO2013103295 disclose a mite composition comprising a population of individuals of a predatory mite species, a prey mite population as a food source for the predatory mite individuals and a carrier. The composition according to this prior art document is suitable for rearing a mite species and for the biological control of pests. The publication specifies that the carrier particles should be in specific dimensions. The most commonly used prey mites in the mass rearing methods of the prior art are Astigmatid mites, such as *Tyrophagus putrescentiae*, *Thyreophagus entomophagous* and *Carpoglyphus lactis L.* For example, WO2006071107, WO2006056552, WO2008015393, WO2008104807 and WO2007075081 demonstrate the potential of Astigmatids to be used as prey mites in mass-rearing of predatory mites in specific life stages and predator/prey combinations. EP 2 124 573 A2 discloses a composition comprising a population of predatory mites selected from Amblyseius swirskii, and a population of host mites selected from the family Suidasiidae, the composition comprising a carrier for individuals of said populations.

Mites from the family of Tarsonemidae were grown on lab-scale on living plant material and were used to study attacks by predatory mites. However, mite compositions with such prey mite populations are not a realistic solution for commercial culturing since these are known as pests that should not be distributed and the rearing on plant-feeding mites, is undesirable since it involves complex operations and high rearing costs.

In addition, commercial mite rearing requires rearing conditions at a relatively high temperature (generally between 20 and 30 °C) and high humidity (generally between 80 and 95% relative humidity). In these conditions, fungal contamination easily occur.

Therefore, there is also need for improved mite rearing methods that lower the risk of fungal contamination.

Mass rearing systems for predatory mites depend heavily on the availability of suitable prey for the predators. In view of their role in rearing of predatory mites, the commercial relevance of rearing prey mites is increasing.

In view of the above there is a continuing need to obtain improved and more efficient mite compositions for mass rearing and large-scale production of predatory mite populations, for commercial distribution of larger volumes of mite compositions for better management of crop pests.

### SUMMARY OF THE INVENTION

The present invention is set out in the appended claims and relates to the field of insect control and more specifically to a system and method for rearing biological control agents against plant pests.

It is one object of the present invention to disclose a food source for predatory mites and/or insects comprising a mixture of a carrier material particles and individuals of at least one mite species suitable as being a prey for the predatory mites and/or insects, wherein the mixture is formulated in a Mite-Coated Carrier (MCC) form, such that at least 50% of the surface formed by the carrier material particles is coated by the prey individuals, wherein the individuals of the at least one mite species are not exclusively eggs thereof.

It is a further object of the present invention to disclose the food source as defined above, wherein at least a portion of the prey individuals are immobilized so as to form Immobilized MCC (IMCC) mixture.

It is a further object of the present invention to disclose the food source as defined in any of the above, wherein the immobilization is by a treatment selected from the group consisting of: thermal treatment, such as freezing, freeze-drying, heating, cold-shock or heat-shock treatment; chemical treatment, such as gas or fume treatment; radiation treatment, such as UV, microwave, gamma irradiation or X-ray treatment; mechanical treatment, such as vigorous shaking, or stirring, subjecting to shear forces, collision; gas pressure treatment, such as ultrasound treatment, pressure changes, pressure drops; electrical treatment, such as electrocution; immobilizing with an adhesive; immobilization by starvation, such as induced by water or food deprivation; immobilization by suffocation or anoxia treatment, such as by temporarily eliminating oxygen from the atmosphere or replacing oxygen by another gas and any combination thereof.

It is a further object of the present invention to disclose the food source as defined in any of the above, wherein at least a portion of the prey individuals are essentially adhered to the surface of the carrier material particles.

It is a further object of the present invention to disclose the food source as defined in any of the above, wherein the prey individuals are essentially extracted from their rearing media.

It is a further object of the present invention to disclose the food source as defined in any of the above, wherein the food source comprises selected developmental stages of the prey mite individuals, such as eggs, or mobile developmental stages, or a combination thereof.

It is a further object of the present invention to disclose the food source as defined in any of the above, wherein the mobile developmental stages comprise juvenile developmental stages such as larvae or nymphs, or any other mobile mite developmental stage or any combination thereof.

It is a further object of the present invention to disclose the food source as defined in any of the above, wherein the eggs represent a ratio of at least 50%, such as at least 60 %, at least 70%, at least 80%, at least 90% of the total prey individuals, by number.

It is a further object of the present invention to disclose the food source as defined in any of the above, wherein the prey mobile developmental stages represent a ratio of about 1-50%, preferably about 2-25%, more preferably about 2-15% of the total prey individuals, by number.

It is a further object of the present invention to disclose the food source as defined in any of the above, wherein the carrier material particles are selected from the group consisting of particles of sawdust, vermiculite, bran, wheat bran, buckwheat husks, rice husks or millet husks, or comprising a mixture thereof, or any other inert carrier material particles comprising surfaces to which mites can adhere.

It is a further object of the present invention to disclose the food source as defined in any of the above, wherein the predatory mite species is selected from the order Mesostigmata, such as from at least one family selected from Phytoseiidae. Laelapidae, Blattisociidae, Ascidae, Rhodocaridae and Parasitidae, or from the order Trombidiformes, such as from the Prostigmata suborder, e.g. the family Anystidae or Cheyletidae.

It is a further object of the present invention to disclose the food source as defined in any of the above, wherein the predatory mite species is selected from the Phytoseiidae family, such as from the subfamily Amblyseiinae, Phytoseiinae and Typhlodrominae.

It is a further object of the present invention to disclose the food source as defined in any of the above, wherein the predatory mite species is selected from the group consisting of: the genus *Amblyseius,* such as *Amblyseius swirskii,* the genus *Neoseiulus,* such as *Neoseiulus californicus* and *Neoseiulus cucumeris*, the genus *Amblydromalus,* such as *Amblydromalus limonicus,* the genus *Transeius* such as *Transeius montdorensis,* and the genus *Phytoseiulus,* such as *Phytoseiulus persimilis.*

It is a further object of the present invention to disclose the food source as defined in any of the above, wherein the predatory mite species is selected from Mesostigmatid mite species such as selected from: (i) Phytoseiidae such as from: the subfamily of the Amblyseiinae, such as from the genus *Amblyseius,* e.g. *Amblyseius andersoni, Amblyseius aerialis, Amblyseius swirskii, Amblyseius herbicolus* or *Amblyseius largoensis,* from the genus *Euseius* e.g. *Euseius finlandicus, Euseius hibisci, Euseius ovalis, Euseius victoriensis, Euseius stipulatus, Euseius scutalis, Euseius tularensis, Euseius addoensis, Euseius concordis, Euseius ho* or *Euseius citri,* from the genus *Neoseiulus* e.g. *Neoseiulus barkeri, Neoseiulus califormicus, Neoseiulus cucumeris, Neoseiulus longispinosus, Neoseiulus womersleyi, Neoseiulus idaeus, Neoseiulus anonymus, Neoseiulus paspalivorus, Neoseiulus reductus* or *Neoseiulus fallacis,* from the genus *Amblydromalus* e.g. *Amblydromalus limonicus* from the genus *Typhlodromalus* e.g. *Typhlodromalus aripo, Typhlodromalus laila* or *Typhlodromalus peregrinus* from the genus *Typhlodromips* e.g. *Typhlodromips montdorensis,* from the genus *Phytoseiulus,* e.g. *Phytoseiulus persimilis, Phytoseiulus macropilis, Phytoseiulus longipes, Phytoseiulus fragariae;* the subfamily of the Typhlodrominae, such as from the genus *Galendromus* e.g. *Galendromus occidentalis,* from the genus *Typhlodromus* e.g. *Typhlodromus pyri, Typhlodromus doreenae* or *Typhlodromus athiasae;* (ii) Ascidae such as from the genus *Proctolaelaps,* such as *Proctolaelaps pygmaeus* (Muller); from the genus *Blattisocius* e.g. *Blattisocius tarsalis* (Berlese), *Blattisocius keegani* (Fox); from the genus *Lasioseius* e.g. *Lasioseius fimetorum* Karg, *Lasioseius floridensis* Berlese, *Lasioseius bispinosus* Evans, *Lasioseius dentatus* Fox, *Lasioseius scapulatus* (Kenett), *Lasioseius athiasae* Nawar & Nasr; from the genus *Arctoseius* e.g. *Arctoseius semiscissus* (Berlese); from the genus *Protogamasellus* e.g. *Protogamasellus dioscorus* Manson; (iii) Laelapidae such as from the genus *Stratiolaelaps* e.g. *Stratiolaelaps scimitus* (Womersley) (also placed in the genus *Hypoaspis*); *Geolaelaps* e.g. *Geolaelaps aculeifer* (Canestrini) (also placed in the genus *Hypoaspis*); *Androlaelaps* e.g. *Androlaelaps casalis casalis* (Berlese); (iv) Macrochelidae such as from the genus *Macrocheles* e.g. *Macrocheles robustulus* (Berlese), *Macrocheles muscaedomesticae* (Scopoli), *Macrocheles matrius* (Hull); (v) Parasitidae such as from the genus *Pergamasus* e.g. *Pergamasus quisquiliarum* Canestrini; *Parasitus* e.g. *Parasitus fimetorum* (Berlese), *Parasitus bituberosus* Karg; (vi) Prostigmatid mite species such as from: Tydeidae such as from the genus *Homeopronematus* e.g. *Homeopronematus anconai* (Baker); from the genus *Tydeus* e.g. *Tydeus lambi* (Baker), *Tydeus caudatus* (Dugés); from the genus *Pronematus* e.g. *Pronematus ubiquitous* (McGregor); Cheyletidae such as from the genus *Cheyletus* e.g. *Cheyletus eruditus* (Schrank), *Cheyletus malaccensis* Oudemans; Cunaxidae such as from the genus *Coleoscirus* e.g. *Coleoscirus simplex* (Ewing), from the genus *Cunaxa* e.g. *Cunaxa setirostris* (Hermann); Erythraeidae such as from the genus *Balaustium* e.g. *Balaustium putmani* Smiley, *Balaustium medicagoense* Meyer & Ryke, *Balaustium murorum* (Hermann); Stigmaeidae such as from the genus *Agistemus* e.g. *Agistemus exsertus* Gonzalez; such as from the genus *Zetzellia* e.g. *Zetzellia mali* (Ewing).

It is a further object of the present invention to disclose the food source as defined in any of the above, wherein the predatory insect species is selected from the order i) Coleoptera, such as the family Coccinelidae, e.g. *Stethorus punctillum,* ii) Heteroptera, such as the family Anthocoridae, e.g. *Orius laevigatus,* the family Miridae, e.g. *Nesidiocoris tenuis* and *Macrolophus pygmaeus,* iii) Neuroptera such as the family Chrysopidae, e.g. *Chrysoperla carnea,* iv) Thysanoptera, such as the family Thripidae e.g. *Scolothrips sexmaculatus,* v) Diptera, such as the family Syrphidae, e.g. *Episyrphus balteatus,* and vi) Mantodea, such as the family Mantidae (Mantids).

It is a further object of the present invention to disclose the food source as defined in any of the above, wherein the at least one prey species is a non- Tetranychid mite, such as a mite species belonging to the order Astigmata.

It is a further object of the present invention to disclose the food source as defined in any of the above, wherein the Astigmata prey species is selected from members of the family Acaridae, Carpoglyphidae, Glycyphagidae, and/or from the family Chortoglyphagidae.

It is a further object of the present invention to disclose the food source as defined in any of the above, wherein the at least one species from the order Astigmata is selected from members of a genus such as *Acarus, Tyrophagus, Aleuroglyphus, Lardoglyphus, Caloglyphus, Suidasia, Thyreophagus, Carpoglyphus, Glycyphagus, Lepidoglyphus, Blomia,* and/or *Chortoglyphus.*

It is a further object of the present invention to disclose the food source as defined in any of the above, wherein the at least one species from the order Astigmata is selected from: *Acarus siro, Acarus farris, Acarus immobilis, Acarus chaetoxysilos, Tyrophagus longior, Tyrophagus similis, Tyrophagus putrescentiae, Tyrophagus communis, Aleuroglyphus ovatus, Lardoglyphus konoi, Caloglyphus mycophagus, Suidasia nesbitti, Thyreophagus entomophagus, Carpoglyphus lactis, Carpoglyphus munroi, Glycyphagus domesticus, Lepidoglyphus destructor, Blomia freeman, Blomia tropicalis and*/*or Chortoglyphus arcuatus.*

It is a further object of the present invention to disclose the food source as defined in any of the above, wherein the Astigmatid mite species is selected from: (i) Carpoglyphidae such as from the genus *Carpoglyphus* e.g. *Carpoglyphus lactis;* (ii) Pyroglyphidae such as from the genus *Dermatophagoides* e.g. *Dermatophagoides pteronysinus, Dermatophagoides farinae;* from the genus *Euroglyphus* e.g. *Euroglyphus longior, Euroglyphus maynei;* from the genus *Pyroglyphus* e.g. *Pyroglyphus africanus*; (iii) Glycyphagidae such as from the subfamily *Ctenoglyphinae,* such as from the genus *Diamesoglyphus* e.g. *Diamesoglyphus intermedius*or from the genus *Ctenoglyphus,* e.g. *Ctenoglyphus plumiger, Ctenoglyphus canestrinii, Ctenoglyphus palmifer;* the subfamily *Glycyphaginae,* such as from the genus *Blomia,* e.g. *Blomia freemani* or from the genus *Glycyphagus,* e.g. *Glycyphagus ornatus, Glycyphagus bicaudatus, Glycyphagus privatus, Glycyphagus domesticus,* or from the genus *Lepidoglyphus* e.g. *Lepidoglyphus michaeli, Lepidoglyphus fustifer, Lepidoglyphus destructor,* or from the genus *Austroglycyphagus,* e.g. *Austroglycyphagus geniculatus;* from the subfamily *Aëroglyphinae,* such as from the genus *Aëroglyphus,* e.g. *Aëroglyphus robustus*; from the subfamily *Labidophorinae,* such as from the genus *Gohieria,* e.g. *Gohieria. fusca;* or from the subfamily *Nycteriglyphinae* such as from the genus *Coproglyphus,* e.g. *Coproglyphus stammeri* or from the subfamily *Chortoglyphidae,* such as the genus *Chortoglyphus* e.g. *Chortoglyphus arcuatus* and more preferably is selected from the subfamily *Glycyphaginae,* more preferably is selected from the genus *Glycyphagus* or the genus *Lepidoglyphus* most preferably selected from *Glycyphagus domesticus or Lepidoglyphus destructor*; (iv) Acaridae such as from the genus *Tyrophagus* e.g. *Tyrophagus putrescentiae, Tyrophagus tropicus, Tyrophagus communis* from the genus *Acarus* e.g. *Acarus siro, Acarus farris, Acarus gracilis*; from the genus *Lardoglyphus* e.g. *Lardoglyphus konoi,* from the genus *Thyreophagus,* such as *Thyreophagus entomophagus*; from the genus *Aleuroglyphus,* e.g. *Aleuroglyphus ovatus;* (v) Suidasiidae such as from the genus *Suidasia,* such as *Suidasia nesbiti, Suidasia pontifica or Suidasia medanensis.*

It is a further object of the present invention to disclose the food source as defined in any of the above, wherein the food source further comprises a predatory mite and/or insect population, preying on the food source.

It is a further object of the present invention to disclose the food source as defined in any of the above, wherein the food source additionally comprises dead or alive prey mite individuals in a non-MCC or non-IMCC form.

It is a further object of the present invention to disclose the food source as defined in any of the above, wherein the food source is contained in a container such as a sachet, a bottle or any other packaging type container or device configured to holding the food source with or without a predatory mite or insect population preying on the food source.

It is a further object of the present invention to disclose the food source as defined in any of the above, wherein the predatory population has an increased average daily reproduction rate (λ) when feeding on the food source than when feeding on the same prey species not in MCC or IMCC form.

It is a further object of the present invention to disclose the food source as defined in any of the above, wherein the predatory population has an increased average daily reproduction rate (λ) by at least 5% when feeding on the food source than when feeding on the same prey species not in MCC or IMCC form.

It is a further object of the present invention to disclose the food source as defined in any of the above, wherein the predatory population is increased by an average of about 20% per day when feeding on the food source than when feeding on the same prey species not in MCC or IMCC form.

It is a further object of the present invention to disclose the food source as defined in any of the above, wherein the predatory population shows elevated daily reproduction rate (λ) values when preying on the food source as compared to a population of the same predatory species, feeding on a mixture of the same ratio of prey species and carrier material particles, administered not in MCC or IMCC form.

It is a further object of the present invention to disclose the food source as defined in any of the above, wherein the predatory population, feeding on the food source, shows lower mortality rate values, as compared to a population of the same predatory species, feeding on a mixture containing the same prey species, and the same ratio of carrier material particles to prey individuals and the mixture is not formulated in MCC or IMCC form.

It is a further object of the present invention to disclose the food source as defined in any of the above, wherein the predatory population has daily reproduction rate in the range of about 1.10 -1.40, such as 1.15-1.40, 1.20-1.40, 1.25-1.40, 1.30-1.40, or 1.10-1.35, 1.10-1.30, 1.10-1.25, 1.10-1.20 when preying on the food source.

It is a further object of the present invention to disclose the food source as defined in any of the above, wherein the predatory population has a daily oviposition rate of at least 0.50, such as ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95 or at least 2.00 eggs/female/day, when preying on the food source.

It is a further object of the present invention to disclose the food source as defined in any of the above, wherein the predatory population is characterized by a juvenile and/or female survival rate of at least 40%, preferably at least 45%, 50%, 60%, 65%, 70%, 75%, 80%, 85%, 90%, or at least 95%, when preying on the food source.

It is a further object of the present invention to disclose the food source as defined in any of the above, wherein the predatory population is characterized by mortality rate lower than 10%, preferably lower than 8%, 7%, 6% or lower than 5%, when preying on the food source.

It is a further object of the present invention to disclose use of the food source as defined in any of the above, for feeding or rearing predatory mites and/or insects population, preferably as a sole nutrient source for feeding or rearing predatory mites and/or insects population.

It is a further object of the present invention to disclose the use of predatory mite or insect population reared on the food source as defined in any of the above, for crop protection.

It is a further object of the present invention to disclose the use as defined in any of the above, for feeding or rearing predatory mites and/or insects population, preferably as a sole nutrient source for feeding or rearing the predatory mites and/or insects population.

It is a further object of the present invention to disclose the use as defined in any of the above, wherein the predatory population has an increased average daily reproduction rate (λ) when feeding on said food source than when feeding on the same prey species not in MCC or IMCC form.

It is a further object of the present invention to disclose the use as defined in any of the above, wherein the predatory population has an increased average daily reproduction rate (λ) by at least 5% when feeding on said food source than when feeding on the same prey species not in MCC or IMCC form.

It is a further object of the present invention to disclose the use as defined in any of the above, wherein the predatory population is increased by an average of about 20% per day when feeding on said food source than when feeding on the same prey species not in MCC or IMCC form.

It is a further object of the present invention to disclose the use as defined in any of the above, wherein the predatory population shows elevated daily reproduction rate (λ) values when preying on said food source as compared to a population of the same predatory species, feeding on a mixture of the same ratio of prey species and carrier material particles, administered not in MCC or IMCC form.

It is a further object of the present invention to disclose the use as defined in any of the above, wherein the predatory population, feeding on said food source, shows lower mortality rate values, as compared to a population of the same predatory species, feeding on a mixture containing the same prey species, and the same ratio of carrier material particles to prey individuals and said mixture is not formulated in MCC or IMCC form.

It is a further object of the present invention to disclose the use as defined in any of the above, wherein said predatory population has daily reproduction rate in the range of about 1.10 -1.40, such as 1.15-1.40, 1.20-1.40, 1.25-1.40, 1.30-1.40, or 1.10-1.35, 1.10-1.30, 1.10-1.25, 1.10-1.20 when preying on said food source.

It is a further object of the present invention to disclose the use as defined in any of the above, wherein the predatory population has a daily oviposition rate of at least 0.50, such as ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95 or at least 2.00 eggs/female/day, when preying on said food source.

It is a further object of the present invention to disclose the use as defined in any of the above, wherein the predatory population is characterized by a juvenile and/or female survival rate of at least 40%, preferably at least 45%, 50%, 60%, 65%, 70%, 75%, 80%, 85%, 90%, or at least 95%, when preying on said food source.

It is a further object of the present invention to disclose the use as defined in any of the above, wherein the predatory population is characterized by mortality rate lower than 10%, preferably lower than 8%, 7%, 6% or lower than 5%, when preying on said food source.

It is a further object of the present invention to disclose a method for producing a food source for predatory mites and/or insects as defined in any of the above, wherein the method comprises steps of: (a) providing a rearing population of at least one mite species suitable as being a prey for a preselected predatory mite or insect species, the rearing population comprising individuals of the at least one prey species, preferably together with a suitable nutrient source for the prey mite individuals; (b) obtaining at least one preselected developmental stage fraction of the prey population by separating means such as by sieving or by other mechanical process, or by behavioral manipulation or by any other separating means or method; (c) mixing the obtained fraction with carrier material particles (e.g. sawdust) and with water, so that the mite individuals coat at least 50% of the surface formed by the carrier material particles to form a Mite- Coated Carrier (MCC) type mixture; (d) drying the MCC type mixture; and (e) optionally, immobilizing at least a portion of the mite individuals to obtain Immobilized Mite- Coated Carrier (IMCC) type mixture to be used as a food source for the preselected predatory mite and/or insect species.

It is a further object of the present invention to disclose the method as defined in any of the above, wherein the step of immobilizing comprises immobilization treatment selected from the group consisting of: thermal treatment, such as freezing, freeze-drying, heating, cold-shock or heat-shock treatment; chemical treatment, such as gas or fume treatment; radiation treatment, such as UV, microwave, gamma irradiation or X-ray treatment; mechanical treatment, such as vigorous shaking, or stirring, subjecting to shear forces, collision; gas pressure treatment, such as ultrasound treatment, pressure changes, pressure drops; electrical treatment, such as electrocution; immobilizing with an adhesive; immobilization by starvation, such as induced by water or food deprivation; immobilization by suffocation or anoxia treatment, such as by temporarily eliminating oxygen from the atmosphere or replacing oxygen by another gas and any combination thereof.

It is a further object of the present invention to disclose the method as defined in any of the above, wherein the step of obtaining at least one fraction of the prey population comprises steps of separating, e.g. by size, the prey population to extract at least one preselected developmental stage of the prey individuals, from their rearing media.

It is a further object of the present invention to disclose the method as defined in any of the above, further comprises steps of storing the MCC or IMCC mixture.

It is a further object of the present invention to disclose the method as defined in any of the above, wherein at least a portion of the prey individuals are essentially adhered to the surface of the carrier material particles.

It is a further object of the present invention to disclose the method as defined in any of the above, further comprises steps of providing the MCC and/or IMCC mixture as a nutrient source for predatory mites and/or insects (natural enemies).

It is a further object of the present invention to disclose the method as defined in any of the above, further comprises steps of separating the predatory mites and/or insects from the MCC and/or IMCC, and optionally adding carrier material particles to the separated predatory mites and/or insects.

It is a further object of the present invention to disclose the method as defined in any of the above, further comprises steps of packaging or holding the predatory mites and/or insects, with or without the MCC and/or IMCC mixture, in a device or container configured to holding the predatory mites and/or insects, particularly a slow release device, such as a sachet, a bottle or any other packaging type container or device for holding predatory mites and/or insects.

It is a further object of the present invention to disclose the method as defined in any of the above, further comprises steps of: (f) mixing the MCC or IMCC mixture with a predatory mite or insect population capable of preying on the prey mite species; (g) rearing the predatory population on the MCC or IMCC mixture for a predetermined period of time to obtain a rearing product; (h) optionally, mixing the rearing product with carrier material particles; and (i) packaging the rearing product of step (g) or the mixture of step (h) in predetermined amounts and/or concentration.

It is a further object of the present invention to disclose the method as defined in any of the above, wherein the method further comprises steps of (a) separating eggs and/or juvenile developmental stages such as larvae and/or nymphs from the preselected prey rearing population; (b) mixing the separated eggs and/or juvenile developmental stages such as larvae and/or nymphs with carrier material particles such as carrier material particles selected from sawdust, wheat bran, buckwheat husks, rice husks or millet husks, or comprising a mixture thereof, and water, so as to essentially coat the carrier material particles with layer of eggs and/or juvenile developmental stages such as larvae and/or nymphs; (c) freezing the mixture of step (b); and (d) rearing the predatory mite or insect individuals on the mixture as a food source.

It is a further object of the present invention to disclose the method as defined in any of the above, wherein the prey individuals comprise eggs, or mobile developmental stages, or a combination thereof, of the at least one prey species.

It is a further object of the present invention to disclose the method as defined in any of the above, wherein the mobile developmental stages comprise juvenile developmental stages such as larvae or nymphs or any other juvenile mobile mite developmental stage or any combination thereof.

It is a further object of the present invention to disclose the method as defined in any of the above, wherein the eggs represent a ratio of at least 50%, such as at least 60 %, at least 70%, at least 80%, at least 90% of the total prey individuals, by number.

It is a further object of the present invention to disclose the method as defined in any of the above, wherein the prey mobile developmental stages represent a ratio of about 1-50%, preferably about 2-25%, more preferably about 2-15% of the total prey individuals, by number.

It is a further object of the present invention to disclose the method as defined in any of the above, wherein the carrier material particles are selected from the group consisting of particles of sawdust, vermiculite, bran, wheat bran, buckwheat husks, rice husks or millet husks, or comprising a mixture thereof, or any other inert carrier material particles comprising surfaces to which mites can adhere.

It is a further object of the present invention to disclose the method as defined in any of the above, wherein the predatory mite species is selected from the Mesostigmata order such as from at least one family selected from Phytoseiidae. Laelapidae, Blattisociidae, Ascidae, Rhodocaridae and Parasitidae, from the Trombidiformes order, such as from the Prostigmata suborder, e.g. Anystidae and Cheyletidae.

It is a further object of the present invention to disclose the method as defined in any of the above, wherein the predatory mite species is selected from the Phytoseiidae family, such as from the subfamilies Amblyseiinae, Phytoseiinae and Typhlodrominae.

It is a further object of the present invention to disclose the method as defined in any of the above, wherein the predatory mite species is selected from the group consisting of: the genus *Amblyseius,* such as *Amblyseius swirskii,* the genus *Neoseiulus,* such as *Neoseiulus californicus* and *Neoseiulus cucumeris,* the genus *Amblydromalus,* such as *Amblydromalus limonicus* , the genus *Transeius* such as *Transeius montdorensis* and the genus *Phytoseiulus,* such as *Phytoseiulus persimilis.*

It is a further object of the present invention to disclose the method as defined in any of the above, wherein the predatory insect species is from the order i) Coleoptera, such as the family Coccinelidae, e.g. *Stethorus punctillum*, ii) Heteroptera, such as the family Anthocoridae, e.g. *Orius laevigatus,* the family Miridae, e.g. *Nesidiocoris tenuis* and *Macrolophus pygmaeus,* iii) Neuroptera such as the family Chrysopidae, e.g. *Chrysoperla carnea,* iv) Thysanoptera, such as the family Thripidae e.g. *Scolothrips sexmaculatus*, v) Diptera, such as the family Syrphidae, e.g. *Episyrphus balteatus,* and vi) Mantodea, such as the family Mantidae.

It is a further object of the present invention to disclose the method as defined in any of the above, wherein the at least one prey species is a non-Tetranychid mite, such as a mite species belonging to the order Astigmata.

It is a further object of the present invention to disclose the method as defined in any of the above, wherein the Astigmatid mite species is selected from: (i) Carpoglyphidae such as from the genus *Carpoglyphus* e.g. *Carpoglyphus lactis*; (ii) Pyroglyphidae such as from the genus *Dermatophagoides* e.g. *Dermatophagoides pteronysinus, Dermatophagoides farinae*; from the genus *Euroglyphus* e.g. *Euroglyphus longior, Euroglyphus maynei*; from the genus *Pyroglyphus* e.g. *Pyroglyphus africanus*; (iii) Glycyphagidae such as from the subfamily *Ctenoglyphinae,* such as from the genus *Diamesoglyphus* e.g. *Diamesoglyphus intermediusor* from the genus *Ctenoglyphus,* e.g. *Ctenoglyphus plumiger, Ctenoglyphus canestrinii, Ctenoglyphus palmifer*; the subfamily *Glycyphaginae,* such as from the genus *Blomia,* e.g. *Blomia freemani* or from the genus *Glycyphagus,* e.g. *Glycyphagus ornatus, Glycyphagus bicaudatus, Glycyphagus privatus, Glycyphagus domesticus,* or from the genus *Lepidoglyphus* e.g. *Lepidoglyphus michaeli, Lepidoglyphus fustifer, Lepidoglyphus destructor,* or from the genus *Austroglycyphagus,* e.g. *Austroglycyphagus geniculatus;* from the subfamily *Aëroglyphinae,* such as from the genus *Aëroglyphus,* e.g. *Aëroglyphus robustus;* from the subfamily *Labidophorinae,* such as from the genus *Gohieria,* e.g. *Gohieria. fusca*; or from the subfamily *Nycteriglyphinae* such as from the genus *Coproglyphus*, e.g. *Coproglyphus stammeri* or from the subfamily *Chortoglyphidae,* such as the genus *Chortoglyphus* e.g. *Chortoglyphus arcuatus* and more preferably is selected from the subfamily *Glycyphaginae,* more preferably is selected from the genus *Glycyphagus* or the genus *Lepidoglyphus* most preferably selected from *Glycyphagus domesticus or Lepidoglyphus destructor*; (iv) Acaridae such as from the genus *Tyrophagus* e.g. *Tyrophagus putrescentiae, Tyrophagus tropicus, Tyrophagus communis* from the genus *Acarus* e.g. *Acarus siro, Acarus farris, Acarus gracilis;* from the genus *Lardoglyphus* e.g. *Lardoglyphus konoi,* from the genus *Thyreophagus,* such as *Thyreophagus entomophagus*; from the genus *Aleuroglyphus,* e.g. *Aleuroglyphus ovatus;* (v) Suidasiidae such as from the genus *Suidasia,* such as *Suidasia nesbiti, Suidasia pontifica or Suidasia medanensis.*

It is a further object of the present invention to disclose the method as defined in any of the above, further comprises steps of adding dead or alive prey mite individuals of at least one species in a non-MCC or non-IMCC form to the food source, optionally comprising predatory mite and/insect individuals.

It is a further object of the present invention to disclose a food source, a nutrient source or a food product or composition for predatory mites and/or insects, produced by the method as defined in any of the above. It is a further object of the present invention to disclose a rearing composition comprising a predatory mite and/or insect population, together with the food source as defined in any of the above, and optionally together with carrier material particles, such as sawdust, vermiculite, bran, wheat bran, buckwheat husks, rice husks or millet husks, or comprising a mixture thereof, or any other inert carrier material particles comprising surfaces to which mites can adhere.

It is a further object of the present invention to disclose the rearing composition as defined in any of the above, wherein the food source comprises a mixture of carrier material particles and individuals of at least one preselected mite species suitable as being a prey for the predatory mite and/or insect, preferably Astigmatid prey, most preferably immobilized Astigmatid prey species, in particular a *Carpoglyhus* species, having life stages comprising mostly eggs and larvae and/or nymphs, the mixture is in a Mite-Coated Carrier (MCC) form, such that at least 50% of the surface formed by the carrier material particles is coated by the mite life stages, preferably, in a form of Immobilized Mite- Coated Carrier (MCC), such that the carrier material particles are coated by the immobilized, preferably freezed, mite life stages.

It is a further object of the present invention to disclose a predatory mite and/or insect population, in a composition comprising a food source as defined in any of the above, wherein the predatory mite or insect population is capable preying on a food source as defined in any of the above.

It is a further object of the present invention to disclose the predatory mite and/or insect population as defined in any of the above, wherein the population has daily reproduction rate in the range of about 1.10 -1.40, such as 1.15-1.40, 1.20-1.40, 1.25-1.40, 1.30-1.40, or 1.10-1.35, 1.10-1.30, 1.10-1.25, 1.10-1.20 preying on the food source.

It is a further object of the present invention to disclose the predatory mite and/or insect population as defined in any of the above, wherein the population has a daily oviposition rate of at least 0.50, such as ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95 or at least 2.00 eggs/female/day, when preying on the food source.

It is a further object of the present invention to disclose the predatory mite and/or insect population as defined in any of the above, wherein the population is characterized by a juvenile and/or female survival rate of at least 40%, preferably at least 45%, 50%, 60%, 65%, 70%, 75%, 80%, 85%, 90%, or at least 95%, when preying on the food source.

It is a further object of the present invention to disclose the predatory mite and/or insect population as defined in any of the above, wherein the population is characterized by mortality rate lower than 10%, preferably lower than 8%, 7%, 6% or lower than 5% when preying on the food source.

It is a further object of the present invention to disclose the predatory mite and/or insect population as defined in any of the above, wherein the population has an increased average daily reproduction rate (λ) after feeding on a prey species processed in MCC or IMCC form than after feeding the population with the same prey species not processed in MCC or IMCC form.

It is a further object of the present invention to disclose the predatory mite and/or insect population as defined in any of the above, wherein the population has an increased average daily reproduction rate (λ) by at least 5% when preying on the food source than after feeding the population with the same prey species not in MCC or IMCC form.

It is a further object of the present invention to disclose the predatory mite and/or insect population as defined in any of the above, wherein the predatory mite population feeding on a prey species in MCC or IMCC form shows elevated reproduction rate values as compared to a population of the same predatory mite species, feeding on a mixture of the same ratio of prey species and carrier material particles, administered not in MCC or IMCC form.

It is a further object of the present invention to disclose a method of rearing a predatory mite or insect individuals, the method comprising steps of feeding individuals of a preselected predatory mite or insect species with a food source as defined in any of the above.

It is a further object of the present invention to disclose a method for rearing predatory mite or insect individuals, the method comprising providing a preselected predatory mite or insect population as defined in any of the above, preferably in a composition as defined in any of the above, and allowing the predatory mite or insect individuals to prey on the food source as defined in any of the above.

It is a further object of the present invention to disclose a device for containing and/or releasing mite or insect individuals as defined in any of the above, and/or a composition as defined in any of the above, wherein the device comprises an exit for mobile life stages of predatory mite or insect species, preferably an exit suitable for providing a sustained release of a number of mobile life stages.

It is a further object of the present invention to disclose use of a predatory mite or insect population as defined in any of the above, or a rearing composition as defined in any of the above, preferably in a device as defined in any of the above, for crop protection against pests.

### BRIEF DESCRIPTION OF THE DRAWINGS

In order to understand the invention and to see how it may be implemented in practice, a plurality of embodiments is adapted to now be described, by way of non-limiting example only, with reference to the accompanying drawings; wherein:
**Fig. 1** is a graphic representation showing the effect of using processed *C*. *lactis* species in an Immobilized Mite- Coated Carrier (IMCC) form on rearing *A*. *swirskii* population, as compared to feeding on *C*. *lactis* mite individuals and carrier material particles, without IMCC processing, Fig. 1A presents daily reproduction rate (λ) of *A*. *swirskii,* Fig. 1B presents the number of observations (N) made after each of the feeding types for each population;
**Fig. 2** is a graphic representation of the effect of feeding *P. persimilis* population with *C. lactis* individuals either in IMCC form or without IMCC processing on daily reproduction rate (λ) (as shown in Fig.2A), and on mortality rate (as shown in Fig. 2B); and
**Fig. 3** is illustrating a flowchart depicting steps of a process for the production of the MCC or IMCC food source for feeding predatory mites and/or insects, as an embodiment of the present invention.

### DETAILED DESCRIPTION OF THE INVENTION

The present invention provides a food source for predatory mites and/or insects and its use in a method for rearing the predatory mites and/or insects. The prey mites within the food source are mostly Astigmatic mites that feed on stored products and are therefore significantly cheap to produce.

It is an aspect of the present invention to provide a food source for predatory mites and/or insects comprising a mixture of carrier material particles and individuals of at least one mite species suitable as being a prey for said predatory mites and/or insects, wherein said mixture is formulated in a Mite-Coated Carrier (MCC) form, such that at least 50% of the surface formed by said carrier material particles is coated by said prey individuals.

According to one embodiment, the present invention provides a food source comprising prey mites in a new formulation, for rearing a wide range of predatory mites (class:Arachnida, subclass:Acari) and insects (class: insect) in a cost- effective and efficient way. The food source comprises a mixture of carrier material particles and individuals of at least one preselected mite species suitable as being a prey for said predatory mites or insects. According to aspects of the present invention the prey individuals comprise mostly eggs and mobile developmental stages formulated in a Mite- Coated Carrier (MCC) form such that the carrier material particles are coated or covered by the prey mite individuals.

According to one embodiment, the present invention provides a food or a nutrient source or composition for predatory mites and/or insects comprising prey mite eggs and juvenile developmental stages (such as larvae and/or nymphs) of the species *Carpoglyphus lactis* (Cl) or other Astigmatic mite species, in a mixture with carrier material particles, such that at least 50% of the surface formed by the carrier material particles is coated by the prey mite individuals (especially dead or otherwise immobilized) in a Mite- Coated Carrier (MCC) form, especially in an Immobilized Mite- Coated Carrier (IMCC) form.

It is unexpectedly demonstrated by the present disclosure that this unique form or type of prey mite- formulation or processing increases the availability of the prey nutrient source to the predatory mites or insects. It is shown that the preying efficacy of the predatory mites or insects on the MCC or IMCC forms is significantly higher as compared to rearing the same predatory mite or insect species on the same prey, served in the same amount or concentration, but not in MCC or IMCC-type form. It is demonstrated by the present invention that when preying on MCC or IMCC food type, the daily reproduction rate (λ) of the predatory population (mite or insect species) is significantly increased and the mortality rate is decreased, especially relative to predatory population of the same species reared on the same prey species served in a non- MCC or IMCC type, e.g., the same amount/ratio of prey and carrier material particles administered not in MCC/IMCC form.

According to a further embodiment, the prey individuals within the food source of the present invention may comprise living prey, dead prey, immobilized or partially immobilized prey, or any combination thereof.

It is further within the scope that the prey individuals within the food source of the present invention may comprise mobile developmental life stages, such as juvenile developmental stages (e.g. larvae and/or nymphs), eggs, and a mixture thereof.

It is further within the scope that the prey mobile developmental stages (e.g. larvae and/or nymphs) within the food source of the present invention represent a ratio of about 1-50%, preferably about 2-25% of the total prey individuals (mobile stages/ eggs + mobile stages, by number).

According to further aspects, the present invention provides a method for producing or preparing a food source for predatory mites or insects, the food source comprises a mixture of individuals of at least one preselected mite species suitable as being a prey for said predatory mite or insect and a carrier material. The mixture is formulated or processed in a Mite- Coated Carrier (MCC)-type form, such that at least 50% of the surface formed by the carrier material particles is coated by the prey individuals. The method comprises steps of:
- Providing a rearing population of at least one mite species suitable as being a prey for a preselected predatory mite or insect species. The rearing population comprises individuals of the at least one prey species, preferably together with a suitable nutrient source for the prey mite individuals.
- Obtaining at least one preselected developmental stage fraction of the prey population by separating means such as by sieving or by other mechanical process, by behavioral manipulation or by any other separating means. For example, the separation or fractionation of the prey population can be made by size, to obtain a separated fraction of mite developmental stages containing mostly eggs, and juvenile mobile stages such as larvae and/or nymphs.
- Mixing the obtained fraction (e.g. containing eggs and larvae and/or nymphs) with inert carrier particles (e.g. sawdust) and optionally with water, to obtain a mixture comprising carrier material particles essentially coated by the mite developmental stages in a Mite- Coated Carrier (MCC) form. Without wishing to be bound by theory, in this process, the mite individuals adhere to the surface of the carrier particles and essentially coat them or cover them.
- Drying the MCC mixture, and
- Optionally, immobilizing, e.g. by freezing, the MCC mixture to obtain Immobilized Mite- Coated Carrier (IMCC) type mixture to be used as a food source for predatory mite insect population.

In some aspects of the invention, the stage of drying the MCC mixture, may further comprise a step of obtaining a sample of said dried mixture to evaluate mobile stages (larvae or nymphs) ratio out of total prey individuals (mobile stages/ eggs + mobile stages).

According to one embodiment, the mobile stages (larvae or nymphs) ratio out of total prey individuals (e.g. eggs + mobile stages) is in the rage of about 1-25%, preferably about 2-15% of the total prey individuals (mobile stages/ eggs + mobile stages) by number.

According another embodiment of the present invention, the method as defined in any of the above may further comprises steps of:
- mixing the MCC and/or IMCC food source with a predatory mite or insect population of preselected species;
- rearing the predatory population on the MCC and/or IMCC type food source for a predetermined period of time to obtain a primary rearing product;
- optionally, sieving the primary rearing product to separate the mite individuals from the carrier material particles; and
- optionally, packaging the primary product or the sieved mite individuals in predetermined amounts and/or concentration; alternatively, mixing said sieved mite individuals with carrier material particles and packaging the resultant mixture in predetermined amounts and/or concentration.

As used herein the term "about" denotes ± 10% of the defined amount or measure or value.

The term "essentially" as used herein means in essence, namely basically or fundamentally, it is generally used to identify or stress the basic or essential character or nature of a thing or to say that a description is basically true or accurate. In other aspects, it means relating to the most important characteristics of something. In the current disclosure, it may further mean mostly, or basically or fundamentally. It may refer to a description (e.g. carrier particles coated or covered by mite individuals) which is true or accurate in at least 50%, preferably at least 60%, at least 70%, at least 80%, at least 90% or at least 95% of the cases. It may further refer to a description (e.g. carrier particles coated or covered by mite individuals) where mite individuals cover or coat at least 50%, preferably at least 60%, at least 70%, at least 80%, at least 90% or at least 95% of the surface of each carrier particle.

The term "Mite-Coated Carrier" or "MCC" in the context of the present invention, refers to a mixture comprising inert carrier particles essentially coated or covered or adhered with mite developmental life stages, especially eggs and/or mobile developmental stages, particularly juvenile life stages, more particularly, larvae and/or nymphs. Without wishing to be bound by theory, in the process for preparing the MCC food source, the mite individuals (e.g. comprising eggs and/or mobile developmental stages) essentially adhere to the surface of the carrier particles so as to essentially coat or cover them with a layer(s) or film(s) of mite individuals. This MCC mixture is herein used as a food or nutrient source or composition for efficiently rearing (or mass rearing) predatory mites and insects in a cost effective manner.

According to certain aspects of the present invention, the aforementioned MCC mixture may be subjected to immobilization treatment such as freezing, such that at least a portion of the mite developmental stages individuals are at least partially immobilized or particularly dead or not alive to form "Immobilized Mite-Coated Carrier" or "IMCC" mixture or formulation used as a food source for efficiently rearing predatory mites and insects.

In general, the term "predators" refers to animals that eat other animals, called prey. The predator population of the present invention is used as biological control agent (BCA). It is herein acknowledged that predatory mites naturally feed primarily on all life stages (eggs, nymphs, and adults) of a wide array of spider mites, as well as other plant-feeding mites such as rust mites and bulb mites. They also feed on the eggs and immature stages, such as crawlers and nymphs, of insects like thrips, whiteflies, and scale insects. The adults of some species feed on pollen, honeydew, fungi, and leaf sap.

Examples of predatory mites within the scope of the present invention include mite species of the Mesostigmata or Trombidiformes (suborder: Prostigmata) order, for example of the Phytoseiidae, Laelapidae, Blattisociidae, Ascidae, Rhodocaridae, Parasitidae, Anystidae or Cheyletidae family, e.g. the genus *Amblyseius,* such as *Amblyseius swirskii,* the genus *Neoseiulus,* such as *Neoseiulus californicus, Neoseiulus cucumeris*, the genus *Amblydromalus*, such as *Amblydromalus limonicus,* the genus *Transeius* such as *Transeius montdorensis* and the genus *Phytoseiulus,* such as *Phytoseiulus persimilis.*

The term "predatory insects" as used herein generally refers to insects that eat pest insects and are used for natural or biological control of plant pests.

The most common insect predators are in the beetle, true bug, lacewing, wasp, and dragonfly families, as well as flies. Predatory insects (Class: Insecta) included within the scope of the present invention belong, for example, to the orders:
- Coleoptera (beetles - for example family Coccinelidae, for example *Stethorus punctillum*)*.*
- Hemiptera, Suborder: Heteroptera (true bugs, for example family Anthocoridae, for example *Orius laevigatus*; family Miridae, for example *Nesidiocoris tenuis, Macrolophus pygmaeus).*
- Neuroptera (lacewings, for example family Chrysopidae, for example *Chrysoperla carnea).*
- Thysanoptera (predatory thrips for example *Scolothrips sexmaculatus*)
- Diptera (flies, for example family Syrphidae, for example *Episyrphus balteatus*)*.*
- Mantodea (mantids).

The term "individual" or "individuals" or "mite individuals" refers in the context of the present invention to mite developmental stages including, but not limited to eggs, juvenile mite stages such as larva, nymph, protonymph and deutonymph (third instar) individuals. In some aspects these terms also include adult stages.

The term "juvenile mite" or "juvenile mites" or "juvenile developmental stages" refers hereinafter to mite developmental life stages or mite developmental phases or instar including larva, nymph, protonymph and deutonymph (third instar) individuals.

The term "mobile stages" refers hereinafter to mite developmental stages including larva, nymph, protonymph, deutonymph (third instar) and adult stages, but not eggs.

The term "immobilized" used hereinafter generally means that at least a portion of the prey mite individuals (e.g. before or after MCC processing), have been subjected to an immobilization treatment. An immobilization treatment should be construed to mean a treatment which impairs the motility that a prey individual has in any of its life stages (including immobile stages, i.e. eggs and any mobile developmental stage). Motility being the capability of moving spontaneously and independently. As the skilled person is aware of, life stages of mites which are motile are larvae, nymphs and adults. Thus treatments that impair the motility of any of these stages should be considered to be an immobilization treatment. In addition treatments that prevent individuals to develop from a non-motile life stage, such as from the egg stage to a motile life stage, should also be considered an immobilization treatment. According to a preferred embodiment the immobilized mite individuals comprise eggs, larvae, nymphs or adults, preferably lives stages comprising eggs, most preferably eggs combined with juvenile life stages. According to a further preferred embodiment the prey individuals are permanently immobilized. A treatment rendering the prey individuals "non-viable" (i.e. causing death) may be considered a permanently immobilizing treatment. According to some embodiments of the present invention the immobilized, preferably non-viable mite individuals are produced by or exposed to a treatment including, but not limited to, thermal treatment, such as freezing, freeze-drying, heating, cold-shock or heat-shock treatment; chemical treatment, such as gas or fume treatment; radiation treatment, such as UV, microwave, gamma irradiation or X-ray treatment; mechanical treatment, such as vigorous shaking, or stirring, subjecting to shear forces, collision; gas pressure treatment, such as ultrasound treatment, pressure changes, pressure drops; electrical treatment, such as electrocution; immobilizing with an adhesive; immobilization by starvation, such as induced by water or food deprivation; immobilization by suffocation or anoxia treatment, such as by temporarily eliminating oxygen from the atmosphere or replacing oxygen by another gas and any combination thereof. As the mite prey, non-hatching eggs e.g. of Astigmatid mites (e.g. immobilized by freezing), more preferably in combination with immobilized, in particular non-viable, juvenile mite stages, e.g. Astigmatid live stages (larvae and nymphs) are most preferred in the context of the present invention, in particular is a formulation wherein inert carrier particles are essentially covered or coated by the immobilized prey developmental life stages (e.g. dead eggs and larvae or nymphs).

The term "non-viable" as used hereinafter generally means not capable of living, growing, developing, reproducing or functioning (including hatching). According to main aspects of the present invention it refers to dead or not alive or non-living or immobilized mites (i.e. any mite developmental stage or phase) and/or mite eggs. In a specific embodiment of the present invention, non-viable Astigmata mites and/or eggs are used in an MCC/IMCC form as a prey for predatory mites, e.g. of the order Mesostigmata or Trombidiformes (suborder: Prostigmata), and/or predatory insects.

The term "prey" or "prey mite" or "prey species" or "prey mite species", as used herein, generally encompass any mite species, particularly mite species suitable as a food or nutrient source for predatory mite and/or insect species, such as a factitious host for the predatory mite or insect, e.g. non- *Tetranychus* mite. The prey mite individuals may comprise preselected developmental stages, for example, eggs and /or juvenile developmental stages such as larvae or nymphs. According to some embodiments, the mite developmentakl stages include immobilized mite developmental stages, such as non-hatching eggs (e.g. due to immobilization treatment such as by freezing) and /or immobilized juvenile developmental stages such as larvae or nymphs.

According to embodiments of the different aspects of the invention, selection of a non-Tetranychid mite prey (e.g. Astigmatid species) is disclosed.

According to a specific embodiment, the food source or composition of the present invention comprises a mixture of carrier material particles coated or covered by Astigmatic mite species, e.g. C. *lactis* eggs and/or mites and/or larvae, immobilized by freezing, used as a prey for predatory mites or insects. According to an aspect of the invention, the eggs, mites and/or larvae may be non-viable or dead.

The term "Astigmatid" or "Astigmata" or "Astigmatic mites" or "Astigmatina" as used herein refers to mite order within the Subclass: Acari. The Astigmatina are a "cohort" of mites. Astigmatina belongs to the Sarcoptiformes, which contains the "biting" Acariformes. The Astigmata order contains superfamilies with over thousands of genera. Non limiting examples of such superfamilies and families, within the scope of the present invention may include:

### Suborder: Acaridia

### Superfamilies:

Schizoglyphoidea: examples of families include: Schizoglyphidae
Histiostomatoidea: examples of families include: Histiostomatidae, Guanolichidae
Canestrinioidea: examples of families include: Chetochelacaridae, Lophonotacaridae, Canestriniidae, Heterocoptidae
Hemisarcoptoidea: examples of families include: Chaetodactylidae, Hyadesiidae, Carpoglyphidae, Algophagidae, Hemisarcoptidae, Winterschmidtiidae
Glycyphagoidea: examples of families include: Euglycyphagidae, Chortoglyphidae, Pedetropodidae, Echimyopodidae, Aeroglyphidae, Rosensteiniidae, Glycyphagidae
Acaroidea: examples of families include: Sapracaridae, Suidasiidae, Lardoglyphidae, Glycacaridae, Gaudiellidae
Acaridae: examples of families include: Hypoderoidea, Hypoderidae
Suborder: Psoroptidia

### Superfamilies:

Pterolichoidea: examples of families include: Oconnoriidae, Ptiloxenidae, Pterolichidae: examples of families include: Cheylabididae, Ochrolichidae, Gabuciniidae, Falculiferidae, Eustathiidae, Crypturoptidae, Thoracosathesidae, Rectijanuidae, Ascouracaridae, Syringobiidae, Kiwilichidae, Kramerellidae
Freyanoidea: examples of families include: Freyanidae, Vexillariidae, Caudiferidae
Analgoidea: examples of families include: Heteropsoridae, Analgidae, Xolalgidae, Avenzoariidae, Pteronyssidae, Proctophyllodidae, Psoroptoididae, Trouessartiidae, Alloptidae, Thysanocercidae, Dermationidae, Epidermoptidae, Apionacaridae, Dermoglyphidae, Laminosioptidae, Knemidokoptidae, Cytoditidae
Pyroglyphoidea: examples of families include: Pyroglyphidae, Turbinoptidae
Psoroptoidea: examples of families include: Psoroptidae, Galagalgidae, Lobalgidae, Myocoptidae, Rhyncoptidae, Audycoptidae, Listrophoridae, Chirodiscidae, Atopomelidae, Chirorhynchobiidae, Gastronyssidae, Lemurnyssidae, Pneumocoptidae, Sarcoptidae.

The term "factitious host" generally refers hereinafter to an unnatural host or host other than the target host for the predatory mite or insect, one that biocontrol practitioners may more readily rear than the target host in a laboratory. In the context of the present invention, factitious host or prey refers to organisms unlikely to be attacked by a natural enemy or predatory mite or insect in its natural habitat, but that is artificially used to support its development and/or reproduction in specific formulations or compositions. Usually it is a species that is easier and less expensive to rear. Examples within the scope of the present invention include storage mites (such as astigmatid mites) for predatory mites (such as *Phytoseiulus, Amblyseius* or *Neoseiulus* mite species) or predatory insects, mite eggs and/or other separated or fractionized developmental stage for predatory insects and mites. According to further aspects, the term factitious host is used when a biological control agent is forced to feed on an insect or mite that it would not feed on it in nature. This can be done by using specific developmental life stages (e.g. eggs and/or juvenile stages) and/or specific formulations or compositions (such as MCC or IMCC) to allow higher production levels of the predators. For example, the present invention shows that species of commercially available *Phytoseiulus, Amblyseius* or *Neoseiulus* mites can be mass reared with significantly higher reproduction rate and lower mortality rate using astigmatid mites (Acari: Astigmata) as factitious prey formulated in a mite - coated carrier (MCC) mixture form.

The claims further present mite species suitable as the non-Tetranychid arthropod prey in embodiments of the different aspects of the invention. According to many embodiments of the different aspects of the invention, selection of a non-Tetranychid mite prey (e.g. Astigmatid species) is disclosed.

When used as a food source forpredatory mites or insects, Astigmatid individuals are most preferably used in immobilized form, in particular in an immobilized form having immobilized life stages comprising immobilized (non-hatching) eggs and larvae or nymphs, preferably in a ratio of 2-25% of the total prey mite individuals. Immobilization by freezing is in particular suitable and is the most preferred method of immobilization for the prey (e.g. Astigmatid) individuals. Immobilization by irradiation treatment is an alternative highly favorable immobilization method.

According to one embodiment, immobilization (preferably by freezing) is applied to a mixture containing inert carrier material particles (e.g. sawdust) essentially coated or covered by prey (e.g. Astigmatic mite species) individuals containing eggs and larvae or nymphs (MCC) to form IMCC (Immobilized Mite- Coated Carrier) mixture used as a food source for predatory mites or insects.

A preferable Astigmatid mite species used by the biological control system of the present invention as a factitious host population for the predatory mite species (e.g. *Phytoseiulus, Amblyseius* or *Neoseiulus* species) or insect species, is a mite species of the Carpoglyphidae family, more preferably *Carpoglyphus lactis (C. lactis).*

Carpoglyphidae is a mite family in the order Astigmatina, containing four genera: *Carpoglyphus, Coproglyphus, Dichotomiopus* and *Pullea.*

*Carpoglyphus lactis* (*Acarus lactis)*, is most preferably used by the present invention as a diet for rearing predatory insects or mites, e.g. of the *Phytoseiulus, Amblyseius* or *Neoseiulus* genus. *Carpoglyphus lactis* belongs to the *Carpoglyphus* genus. *Carpoglyphus lactis* is acknowledged herein as a stored product mite, infesting saccharide-rich stored commodities including dried fruits, wine, beer, milk products, jams and honey. Since C. *lactis* is capable of feeding on stored products, it is highly desirable and cost effective to raise predatory insects or mites on this mite species in the form of MCC or IMCC as shown for the first time by the present invention. When used as a food source for the predatory insect or mite species, for example of the order Mesostigmata or Trombidiformes (suborder: Prostigmata), *Carpoglyphus lactis* individuals are most preferably used in immobilized form, in particular in an immobilized form having immobilized life stages comprising immobilized (non-hatching) eggs (and/ or immobilized juvenile life stages such as larvae or nymphs). Immobilization by freezing is in particular suitable and the most preferred method of immobilization for *Carpoglyphus lactis.* The prey mites used as a food source for predatory mites are formed in the specific formulation of MCC or IMCC, produced by the method of the present invention.

The term "controlled release" refers hereinafter to slow release, sustained-release, rapid release, designed to release in a prolonged controlled mode or fashion. In the context of the present invention, it refers to release of predatory mites or insects to a crop plant gradually over a specified period of time, e.g. throughout the day or over a week.

The term "device" or "container" refers herein after to a compartment or packaging, an apparatus, a unit, a device, a member, strip or housing which is usually portable, e.g. a sachet, packet, pouch, pocket, sack, a bottle or a bag or any other device or means for holding, packaging, containing, rearing or releasing the food source e.g. composition or formulation, or mite individuals of the present invention.

The term "slow release system" or a "device" or a "container" refers herein after to a sachet- type release system, e.g. a sachet, packet, pouch, pocket, sack, a bottle or a bag or any other device or means for rearing and/or releasing predatory mite and/or insect individuals reared on the food source of the present invention. It is further included within the scope of the present invention that such a system or container refers to an apparatus, a unit, a device, a compartment, a member, strip or housing for slow release of beneficial insects or predatory mites available or known in the art, which gradually releases the beneficial insects or predatory mites. Having knowledge of such systems, the skilled person will understand that such a gradual release is opposed to immediate release.

It is also within the scope of the present invention that the predatory mite or insect releasing system may be of any suitable type. In general the mite or insect releasing system may comprise a container suitable for holding the individuals of the predators/prey mites and individuals of the factitious host mite (e.g. MCC or IMCC). The container comprises an opening and/or means for generating an exit opening for mobile stages of the predatory mites and/or insects. Releasing systems of this type are known to the skilled person and various products are commercially available on the market, e.g. sachet-type or bottle-type releasing systems and other suitable types of releasing systems which are included within the scope of the present invention.

In the context of the present invention, a biological control composition may comprise at least one of the following: (i) predatory mites and/or insects, (ii) predatory mites and/or insects with a factitious host (e.g. dead or immobilized mite life-stages), (ii) predatory mites and/or insects with a mite factitious host formulated in an MCC or IMCC form (carrier material particles coated by live or dead mite life-stages), (iv) arthropod. preferably mite prey, preferably an immobilized arthropod prey, such as a non-phytophagous prey, preferably an Astigmatid prey, most preferably an immobilized Astigmatid prey, such as an immobilized Astigmatid prey, in particular a *Carpoglyhus* prey, having immobilized life stages (e.g. comprising immobilized eggs) formulated in an MCC or IMCC form, and (iv) optionally a carrier.

According to some aspects of the invention, a use of the MCC or IMCC food source comprises applying individuals of a predatory mite or insect population fed with prey mite species formulated in MCC or IMCC form, on a target crop, preferably of an immobilized prey mite species, such as a non-phytophagous prey, preferably an Astigmatid species, most preferably an immobilized Astigmatid species, such as an immobilized Astigmatid species, in particular a *Carpoglyhus* species, having immobilized life stages (for example a mixture of dead life stages, including dead eggs with a carrier in IMCC form).

In a further embodiment, the food source of the present invention comprising a mixture of carrier particles coated with eggs and mobile stages (larvae or nymphs) is applied to a crop plant to be infested with predatory mites or insects capable of preying on the food source. The purpose of applying the prey directly on the plant is to support a population of the natural enemy (e.g. *P. persimilis*) to be established on the plant when the prey (e.g. Tetranychid, the natural host of *Phytoseiulus* predatory species) is scarce. According to specific embodiments, devices for releasing the mobile stages of the prey, as disclosed in the application, are used.

The term "rearing composition" or "rearing population" as used herein generally refers to a composition suitable for breeding, bringing up, raising, upbringing or propagating a mite or insect species by sexual reproduction. A rearing composition comprises a rearing population of the insect or mite species, e.g. *Phytoseiulus, Amblyseius* or *Neoseiulus* species. A rearing population may comprise sexually mature adults from both sexes, and/or individuals of both sexes of other life stages, e.g. eggs, larvae and/or nymphs, which can mature to sexually mature adults. Alternatively the rearing population may comprise one or more fertilized females. In essence a rearing population is capable of increasing the number of its individuals by means of sexual reproduction. More specifically, the term "rearing composition" refers to a composition suitable for the commercial rearing of mites or insects. It is herein acknowledged that mass rearing systems for predatory mites or insects heavily depend on the availability of suitable prey for the predators. Therefore, there is a continuing need to improve rearing systems of both predatory mites or insects and mites suitable as being a rearing prey.

To solve this problem, the present invention provides a food source formulation adapted for effectively and efficiently mass rearing predatory mite or insect species highly important in crop pest (such as spider mites) biological control. Exemplified predatory and prey mite species within the scope of the present invention include the genus *Phytoseiulus,* especially *Phytoseiulus persimilis,* a predatory mite shown to complete its life cycle and reproduce, i.e. for at least 2 generations, preying on Astigmatid mite species or on Phytoseiidae prey mite species, e.g. *Amblyseius swirskii* formulated in MCC or IMCC form.

The term "carrier" refers hereinafter to an inactive or inert substance or particles or vehicle. In a preferred embodiment the food source or rearing composition of the present invention comprises carrier material particles for the individuals of the mite species.

The carrier can be any solid material particles which are suitable to provide a surface to the mite individuals. Examples of suitable carriers are plant materials such as bran (e.g. wheat), sawdust (e.g. fine sawdust), corn cob grits, vermiculite, Poaceae husks, such as millet husks, or rice husks, etc. According to further aspects of the invention, carrier material particles include sawdust, wheat bran, buckwheat husks, rice husks or millet husks, or comprising a mixture thereof, preferably a carrier having carrier elements comprising surfaces to which mites can adhere. In a preferred embodiment, the food source of the present invention and some products and compositions thereof comprise carrier material particles essentially coated or covered by the prey developmental life stages and more particularly by immobilized, e.g. frozen or dead prey eggs and mobile stages such as larvae or nymphs, preferably, immobilized Astigmatid eggs and mobile stages such as larvae or nymphs.

The term "Phytoseiidae" refers hereinafter to a family of mites which feed on thrips and other mite species. They are often used as a biological control agent for managing mite pests. For example, Phytoseiids are an important natural predator of the spider mite. Today, there are about 2,730 documented species belonging to the Phytoseiidae family. The Phytoseiidae family contains the following subfamilies: Amblyseiinae, Phytoseiinae and Typhlodrominae.

The term *"Phytoseiulus"* as used hereinafter refers to a genus of mites in the Phytoseiidae family. This genus of predatory mites is most frequently used to control two-spotted spider mites in greenhouses and outdoor crops. It is within the scope of the present invention that the genus *Phytoseiulus* contains the following species: *Phytoseiulus fragariae, Phytoseiulus longipes, Phytoseiulus macropilis, Phytoseiulus persimilis, Phytoseiulus robertsi and Mesoseiulus longipes (e.g. see https:*//*www.benemite.com*/*mlongipes.htm).* The *Phytoseiulus* predatory mites are known as specialists for spider mites (mites of the family Tetranychidae) which are phytophagous mites.

The term *"Phytoseiulus persimilis"* or *"P. persimilis"* as used hereinafter refers to a predatory mite population comprising the *Phytoseiulus persimilis (P. persimilis)* species. *Phytoseiulus* is a genus of mites in the Phytoseiidae family. This predatory mite is the mite predator most frequently used to control two-spotted spider mites in greenhouses and outdoor crops grown in mild environments. *P. persimilis* is generally used for spider mite control and management. Some of the species they impact include: the two-spotted mite *Tetranychus urticae,* the carmine red mite *T. cinnabarinus,* and the Pacific mite *T. pacificus.* Unlike *Neoseiulus californicus* (Order: Mesostigmata, Family: Phytoseiidae, Subfamily: Amblyseiinae) which may not eat for relatively long periods, *Phytoseiulus persimilis* is known for its requirement for fresh feed. Furthermore, according to existing knowledge *Phytoseiulus persimilis* mites are not flexible by their diet as other available predatory mite species for spider mite control, since they are known to only feed upon specific *Tetranychus* species, but not all of them.

The present invention shows successful reproduction of *P. persimilis* on non-Tetranychid mite prey formulated in MCC form, in particular selected from the order Astigmata and from the immobilized Phytoseiidae formulated in IMCC form. The new rearing system and method of the present invention is much more efficient and cost effective than rearing predatory insects or mites (such as *P. persimilis*) on their conventional diet or on factitious host not formulated in MCC or IMCC form.

The term "trait" refers hereinafter to characteristic or phenotype. A phenotypic trait may refer to the appearance or other detectable characteristic of an individual, resulting from the interaction of its genome, proteome and/or metabolome with the environment. For example, in the context of the present invention an increased reproduction rate as described herein is a phenotypic trait characterizing the predatory mites or insects reared by the food source of the present invention. A trait may be inherited in a dominant or recessive manner, or in a partial or incomplete-dominant manner. A trait may be monogenic (i.e. determined by a single locus) or polygenic (i.e. determined by more than one locus) or may also result from the interaction of one or more genes with the environment. A dominant trait results in a complete phenotypic manifestation at heterozygous or homozygous state; conventionally, a recessive trait manifests itself only when present at homozygous state.

As used herein, the term "population" refers to a plurality of individuals. According to some embodiments the term includes a genetically heterogeneous collection of mites sharing a common genetic derivation.

An exemplified population within the scope of the present invention of predatory mite or insect species (e.g. *Phytoseiulus persimilis*) was fed with prey mites and a carrier mixture in IMCC form and, as a result, showed improved reproduction and/or growth characteristics including at least one characteristic of increased daily reproduction rate and/or daily oviposition rate and/or female and/or juvenile survival rate, lower mortality rate and higher percentage of female individuals capable of reproducing on the IMCC mixture. This is in comparison to an adapted *Phytoseiulus* population fed with a food source of the same prey species containing the same ratio of prey individuals and carrier material particles, but not formulated in MCC or IMCC form.

As used herein, the term "germplasm" refers to the totality of the genotypes of a population or other group of individuals (e.g., a species).

The terms "hybrid" and "hybrid progeny" used herein refers to an individual produced from genetically different parents (e.g., a genetically heterozygous or mostly heterozygous individual).

As used herein, the term "breeding" and grammatical variants thereof, refer to any process that generates a progeny individual. Breeding can be sexual or asexual, or any combination thereof. Exemplary non-limiting types of breeding include crossing, introgressing, selfing, backcrossing, doubled haploid derivative generation, and combinations thereof.

The term "genetic determinant" as used herein refers to genetic determinants such as genes, alleles, QTLs or traits.

Introgression of a genetic determinant means the incorporation of genes, alleles, QTLs or traits into a line wherein essentially all of the desired morphological and physiological characteristics of the line are recovered, in addition to the genetically introgressed determinant. Such a process is often used in cultivar development, in which one or a few genetic determinants are transferred to a desired genetic background, preferably by using backcrossing.

The term "genotype" refers to the genetic constitution of a cell or organism. An individual's genotype includes the specific alleles, for one or more genetic marker loci, present in the individual's haplotype. As is known in the art, a genotype can relate to a single locus or to multiple loci, whether the loci are related or unrelated and/or are linked or unlinked. In some embodiments, an individual's genotype relates to one or more genes that are related in that the one or more of the genes are involved in the expression of a phenotype of interest. Thus, in some embodiments a genotype comprises a summary of one or more alleles present within an individual at one or more genetic loci. In some embodiments, a genotype is expressed in terms of a haplotype.

According to a further embodiment of the present invention, predatory mite or insect population of a species, for example belonging to the order Mesostigmata or Trombidiformes (suborder: Prostigmata), can develop and reproduce on mite individuals of a prey species, for example belonging to the Astigmata order, e.g. *Carpoglyphus lactis.* The prey individuals may be at least partially immobilized, in particular by freezing. The predatory mite or insect population demonstrates significantly improved reproduction rate (daily reproduction rate) and reduced mortality rate when preying on a food source comprising the prey mite species (e.g. belonging to the Astigmata order) processed in MCC or IMCC form.

It is further within the scope that at least partially of the mites used as prey are immobilized by immobilization treatment selected from the group consisting of: thermal treatment, such as freezing, heating, cold-shock or heat-shock treatment; chemical treatment, such as gas or fume treatment; radiation treatment, such as Gamma irradiation, UV, microwave or X-ray treatment; mechanical treatment, such as vigorous shaking, or stirring, subjecting to shear forces, collision; gas pressure treatment, such as ultrasound treatment, pressure changes, pressure drops; electrical treatment, such as electrocution; immobilizing with an adhesive; immobilization by starvation, such as induced by water or food deprivation; immobilization by suffocation or anoxia treatment, such as by temporarily eliminating oxygen from the atmosphere or replacing oxygen by another gas.

The skilled person will understand how these treatments may result in the immobilization of the mite individuals or a potion thereof and that the immobilization treatment should be such that the mite individuals remain a suitable prey (food source) for the predatory mite or insect individuals.

It is further within the scope that the term "immobilized mites" may also mean dead or non-living mites.

The present invention is aimed at developing a system for the mass production of predatory mite or insect species, on a diet comprising mite species (e.g. Astigmatic mites) in the form of MCC or IMCC-type mixture. The system is based on the following components:
1. The predator - mite or insect species.
2. The prey - a mite species, possibly *Carpoglyphus lactis, Glyciphagus domesticus, Lepidoglyphus destructor, Dermatophagoides farinae, Dermatophagoides pteronisinus* or other Astigmatic mite, or other mite species such as *Amblyseius swirskii.*
3. The rearing system - the specific setup in which the predatory mites or insects are reared, comprising the rearing media, the way the prey mite is presented/served to the predator, the prey developmental stage and other factors. A preferred rearing system comprises a mixture of carrier material particles essentially coated or covered by prey mite individuals containing eggs and/or mobile developmental life stages, particularly juvenile life stages, specifically, larvae and/or nymphs, to form Mite- Coated Carrier or MCC form, optionally together with predatory mite or insect individuals capable of reproducing on the prey species in MCC form.

The following rearing methods are within the scope of the present invention:
1. The predator (mite or insect species) is reared on a living MCC mixture of prey mites.
2. The predator (mite or insect species) is fed with a mixture of immobilized prey mites (e.g. in IMCC form) by means of freezing or by other means such as irradiation.
3. A certain developmental stage of the prey mite (e.g. eggs and/or larvae and/or nymphs) is extracted from the prey mite's population, and then served alive or dead as food source to the predator.

It is noted that in all of the above optional rearing methods, the prey mite could be either Astigmatic mite, or other species.

With respect to the final biological control product, the following is within the scope of the present invention:
1. A mixture comprising both the predator (predatory mite or insect population) and the prey mites, or the predator and specific stages of the prey mites used for feeding the predator, or a mixture containing the predator and specific developmental life stages of the prey mites processed with carrier material particles to form MCC or IMCC.
2. A further option is extracting only the predators (mite and/or insect individuals), or in other words, predatory mite or insect population that underwent a separation process from the prey mite individuals or MCC, so that the final product contains only the predators, with or without carrier materia particles.
3. Predatory mites or insects in a slow release device, with or without addition of MCC.

According to one aspect, the present invention provides a food source for predatory mites and/or insects comprising a mixture of carrier material particles and individuals of at least one mite species suitable as being a prey for said predatory mites and/or insects, wherein said mixture is formulated in a Mite-Coated Carrier (MCC) form, such that at least 50% of the surface formed by said carrier material particles is coated by said prey individuals.

According to a further embodiment of the present invention, at least a portion of the prey individuals are immobilized so as to form Immobilized MCC (IMCC) mixture.

According to a further embodiment of the present invention, the immobilization is performed by freezing or by any other immobilization treatment selected from thermal treatment, such as freezing, freeze-drying, heating, cold-shock or heat-shock treatment; chemical treatment, such as gas or fume treatment; radiation treatment, such as UV, microwave, gamma irradiation or X-ray treatment; mechanical treatment, such as vigorous shaking, or stirring, subjecting to shear forces, collision; gas pressure treatment, such as ultrasound treatment, pressure changes, pressure drops; electrical treatment, such as electrocution; immobilizing with an adhesive; immobilization by starvation, such as induced by water or food deprivation; immobilization by suffocation or anoxia treatment, such as by temporarily eliminating oxygen from the atmosphere or replacing oxygen by another gas and any combination thereof.

According to a further embodiment of the present invention, the prey individuals or at least a portion thereof are essentially adhered to the surface of said carrier material particles.

According to a further embodiment of the present invention, the prey individuals are essentially extracted from their rearing media.

According to a further embodiment of the present invention, the food source comprise selected developmental stages of said prey mite individuals, such as eggs, or mobile developmental stages, or a combination thereof.

According to a further embodiment of the present invention the mobile developmental stages comprise juvenile developmental stages such as larvae or nymphs, or any other mobile mite developmental stage or any combination thereof.

The food source as defined above may further comprise predatory mite and/or insect population, rearing or preying on the food source.

According to a further embodiment, the present invention discloses and teaches the use of the food source as defined in any of the above, for rearing predatory mites and/or insects.

According to a further embodiment, the present invention provides a mite composition comprising a predatory mite and/or insect population together with the food source as defined in any of the above, and together with the carrier material particles, such as carrier material particles selected from sawdust, wheat bran, buckwheat husks, rice husks or millet husks, or comprising a mixture thereof, preferably a carrier having carrier elements comprising surfaces to which mites can adhere.

According to a further embodiment, the present invention provides a predatory mite population preying on a food source as defined in any of the above.

In the predatory population, at least 10% of female individuals is capable of reproduction on the MCC prey type, preferably on IMCC prey type having immobilized life stages comprising immobilized eggs. Within the present invention, at least 10% should be construed as meaning at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%, or at least 99%. In the present invention, at least 99% includes that substantially all of the female individuals is capable of reproduction on the MCC prey type, preferably on IMCC prey type having immobilized life stages comprising immobilized eggs. At least 99% also includes that 100% of the female individuals is capable of reproduction on the MCC prey type, preferably on IMCC prey type having immobilized life stages comprising immobilized eggs.

According to a further aspect, the present invention provides a predatory mite population, wherein the population is characterized by a daily oviposition rate of at least 0.55, such as ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95, or ≥ 2.00 eggs/day/female while preying on the MCC prey type, preferably on IMCC prey type having immobilized life stages comprising immobilized eggs. This aspect of the invention includes embodiments wherein the percentage of female individuals capable of reproduction on the MCC prey type, preferably on IMCC prey type having immobilized life stages comprising immobilized eggs is not specified (is unspecified).

A further aspect of the invention relates to a biological control composition comprising predatory individuals, wherein the population is characterized by a daily oviposition rate of at least 0.50, such as ≥ 0.55, ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95, or at least 2.00 eggs/day/female while preying on the MCC prey type, preferably on IMCC prey type having immobilized life stages comprising immobilized eggs.

According to certain embodiments of the different aspects of the invention, female individuals capable of reproduction on the food source of the present invention, are female individuals capable of oviposition on MCC prey, preferably on immobilized Astigmatid prey having immobilized life stages comprising immobilized eggs, particularly, in MCC or IMCC form.

As the skilled person will understand, oviposition capability relates to the capability to lay or produce eggs. Determining oviposition rates is within the ambit of the skill of the skilled person. The oviposition capability of the females preferably is determined after being fed for at least 4 days on the MCC or IMCC prey-type, such as after 5 days or after 6 days.

The daily oviposition rate of a predatory population according to various aspects of the invention may be at least 0.50, such as ≥ 0.55, ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95, or at least 2.00 eggs/day/female, when preying on the food source of the present invention.

In some embodiments, the daily oviposition rate is at least 1 egg per day per female, particularly at least 1.4 eggs/day/female, more particularly between 1.4 - 2 eggs/day/female. In main aspects of the present invention, a daily oviposition rate of at least 1 egg per day per female, particularly at least 1.4 eggs/day/female, more particularly between 1.4 - 2 eggs/day/female, is achieved when using the MCC or IMCC type prey as the sole food source for the predatory individuals. According to further aspects of the present invention, a daily oviposition rate of at least 1 egg per day per female, particularly at least 1.4 eggs/day/female, more particularly between 1.4 - 2 eggs/day/female, is achieved when using the MCC or IMCC type prey as a food source for the predatory individuals in alternation with spider mites or other natural host diet.

Within the present invention the term "at least" in the context of numerical values is considered equivalent with the meaning of the mathematical sign "≥". The skilled person will understand that, being an average value for (the female part of) the population, the oviposition rate or egg production rate may have a fractional value not corresponding to whole eggs. The skilled person will also understand that a mite population having a daily oviposition rate of at least 0.50 eggs/day/female is capable to produce 0.5 eggs/day/female or more. Thus defined differently, a predatory mite or insect population having a daily oviposition rate of ≥ 0.55, ≥ 0.60, ≥ 0.65, ≥ 0.70, ≥ 0.75, ≥ 0.80, ≥ 0.90, ≥ 0.95, ≥ 1.00, ≥ 1.05, ≥ 1.10, ≥ 1.15, ≥ 1.20, ≥ 1.25, ≥ 1.30, ≥ 1.35, ≥ 1.40, ≥ 1.45, ≥ 1.50, ≥ 1.55, ≥ 1.60, ≥ 1.65, ≥ 1.70, ≥ 1.75, ≥ 1.80, ≥ 1.85, ≥ 1.90, ≥ 1.95, or ≥ 2.00 eggs/day/female is capable of producing respectively 0.55, 0.60, 0.65, 0.70, 0.75, 0.80, 0.90, 0.95, 1.00, 1.05, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00 eggs/day/female. Again, if more eggs then the indicated numbers are produced, the indicated number of eggs are produced.

Capability to reproduce on the food source of the present invention (prey individuals in MCC or IMCC form) according to certain embodiments of different aspects of the invention most preferably includes the capability of completing a full ontogenetic cycle. Completion of the ontogenic cycle, as the skilled person will understand is the capability of individuals to develop from the earliest life stage to a subsequent earliest life stage in a second generation, viz. for predatory mites development from a (parent) egg to an (offspring) egg in a next generation or defined differently development from an egg to a sexually mature female individual producing a number of eggs. The skilled person will know and understand that for many predatory mite species, including Phytoseiidae species, copulation with a male individual is required for egg production in females. If a population is capable to complete the ontogentic cycle on a certain food source, it can in theory perpetually cycle through multiple generations on that food source.

The skilled person will understand that in case the number of subsequent generations, is at least 2, a full ontogenetic cycle is completed, as the female offspring of the female has produced (female) offspring. Thus the number of subsequent generations preferably is at least 2, such that at least one ontogentic cycle is completed.

Capability to reproduce on the food source of the present invention (prey individuals in MCC or IMCC type form) according to certain embodiments of different aspects of the invention may also include a juvenile and/or female survival rate of at least 40%. As the skilled person will understand, the juvenile survival rate is the percentage of juvenile life stages that is capable of developing to the adult stage. Juvenile survival rates in the context of the present invention are determined as the percentage post embryonic (post-egg) stages that reach adulthood. The juvenile survival rate is determined on the MCC or IMCC type prey, preferably comprising an immobilized Astigmatid prey having immobilized life stages comprising immobilized eggs (e.g. used as the sole food source). Juvenile survival is determined over a period of between 3 to 7 days, such as over a period of 2, 3, 4, 5, 6, or 7 days, most preferably during a period of 3 days. The female survival rate is the rate of mature females that survive on the MCC or IMCC type prey, preferably an immobilized Astigmatid prey having immobilized life stages comprising immobilized eggs (e.g. when used as the sole food source). Female survival is determined over a period of 7 days. At least 40% for the juvenile survival rate may be between 40% and 95%, such as 45%-90%, 50%-90%, 55-90%, 60%-90%, 65%-90%, 70%-90%, 75%-90%, 45%-85%, 50%-85%, 55-85%, 60%-85%, 65%-85%, 70%-85%, 75%-85%. At least 40% for the female survival rate may be at least 45%, at least 50%, at least 55%, at least 60%, at least 65%, at least 70%, at least 75%, at least 80%, at least 85%, at least 90%, at least 95%, at least 99%. At least 40% and all higher percentages mentioned, include substantially all and 100%.

Capability to reproduce on the food source of the present invention (prey individuals in MCC or IMCC type form) according to certain embodiments of different aspects of the invention may also be characterized by a daily multiplication (or reproduction) rate λ in the range of about 1.10 -1.40, such as 1.15-1.40, 1.20-1.40, 1.25-1.40, 1.30-1.40, or 1.10-1.35, 1.10-1.30, 1.10-1.25, 1.10-1.20. The skilled person will understand that for values for λ above 1.0 the population increases, thus there is reproduction. The skilled person will further understand that due to starvation in a population, also under the circumstance that values for λ for a given population are somewhat below 1.0, individuals in the population may be reproducing (to a level that is not compensating for the level of starvation). The daily multiplication rate according to preferred embodiments relates to daily multiplication rates when using the MCC or IMCC type prey as the food source.

In general, within the context of the present invention life stages parameters, such as oviposition rates and mortality or survival rates, completion of the ontogentic cycle and population growth rates of predatory mites may be determined at 22 degrees Celsius and 85% relative humidity, while food (the MCC or IMCC type prey) is not limiting (presented *ad libidum*)*.*

According to preferred embodiments of the predatory population of the invention, some predatory individuals have predatory behavior towards individuals of a Tetranychid species (or any other natural host/food source/prey). Preferably female individuals have predatory behavior towards Tetranychid individuals. By maintaining predatory behavior towards individuals of a Tetranychid species, the predatory mite individuals can be used as biocontrol agents against the Tetranychid species on which they predate. According to preferred embodiments, the predatory behavior towards individuals of a Tetranychid species (or any other natural host/food source/prey) may be a daily oviposition rate of at least 10, preferably at least 15, more preferably at least 19 eggs per female per 5 days.

According to some embodiments of the present invention, the above described predatory behavior towards individuals of any natural host/food source/prey is achieved when using the food source of the present invention comprising MCC or IMCC form prey as the sole nutrient source or in combination with prey mite species not formulated in MCC or IMCC form, for the reared predatory individuals. According to further aspects of the present invention the above described predatory behavior towards individuals of any natural host/food source/prey species, is achieved when using the food source of the present invention comprising MCC or IMCC form prey for the reared predatory individuals in alternation with a diet of prey species not processed in MCC or IMCC form.

According to one embodiment of the different aspects of the invention, the invention provides a rearing composition comprising: a predatory mite or insect population, and prey mite individuals of at least one mite species (e.g. from the order Astigmata), wherein the prey individuals comprise eggs and/or mobile developmental stages processed/formulated in a Mite- Coated Carrier (MCC) form such that at least 50% of the surface formed by said carrier material particles is coated by said prey individuals. According to one embodiment,

the prey mite is selected from the group consisting of immobilized mites, preferably non-viable mites, non-hatching (immobilized) eggs, preferably non-viable eggs and a combination thereof.

The present invention further provides a slow release system (e.g. sachet) for predatory mites and/or insects, configured to be applied on a crop.

A core aspect of the innovative solution is that the predatory mites and/or insects can reproduce within the system for several generations, using the food source of MCC and/or IMC, while a certain proportion of the predatory mites and/or insects continuously leaves the system and reaches the crop to control pests. This provides a continuous supply of predatory mites and/or insects to the crop without the need to apply them repeatedly by the farmer.

Embodiments of the slow release system provided by the present invention are based upon the following features:
1. Predatory mite and/or insect individuals - species of mites and/or insects used for biological pest control.
2. Food source for the predatory mites and/or insects - a factitious prey or host for example, a mixture of carrier material particles together with frozen eggs and juvenile developmental life stages of *Carpoglyphus lactis (C. lactis)* or another astigmatic mite formulated in IMCC form.
3. The predatory mites and/or insects are combined with their factitious host formulated in or comprising MCC and/or IMCC, at the same physical location. This is done by the following alternative approaches:
   a. Providing the predatory mites and/or insects with their factitious host formulated in or comprising MCC and/or IMCC in a container such as a sachet, packet, pouch, pocket, sack or a bag configured to be hung on the crop plant, from which the mites and/or insects would slowly and continuously be released to the crop during a period of about three weeks.
   b. Applying a mixture containing the predatory mites and/or insects, a carrier and the factitious host formulated in or comprising MCC and/or IMCC as a food source, directly on the crop leaves. From this mixture, the predatory mites and/or insects would slowly be released to the crop during a period of about three weeks.
   c. Applying predatory mites and/or insects and a mixture containing a carrier and the factitious host formulated in or comprising MCC and/or IMCC as a food source for predatory mites and/or insects, separately, directly on the crop leaves.

It is noted that such slow release systems for predatory mites and/or insects are highly desirable for crop protection. Especially desirable is the usage of the factious host in IMCC as a food source for predatory mites and/or insects, and specifically for *P. persimilis* since *P. persimilis* was known as a specialist (natural enemy) of spider mites and therefore reared upon spider mites diet. However, spider mites are not suitable to be used in this kind of mite release systems for the following reasons:
- Spider mites are pests themselves, and if applied alive, they may damage the crop.
- Spider mites cannot reproduce without being supplied with plant material, therefore can't reproduce in a sachet.
- Without being supplied with a food source (plant material), living spider mites die rapidly and shrivel (e.g. within few days).
- If served dead, spider mites quickly shrivel and loose their nutritional value.
- Spider mites are expensive to produce.

It is within the scope of the present invention to provide a composition comprising predatory mites and/or insects reared upon food source comprising prey species in MCC and/or IMCC form, for controlling mite pests, particularly members of the Acari class, family Tetranychidae such as twospotted spider mite, more particularly spider mite species, especially the genera *Tetranychus, Panonychus* and various other mite species.

According to some embodiments of the present invention, the crop is selected from the group consisting of greenhouse grown crops and open field crops. Non limiting examples of crop types within the scope of the present invention include vegetables, ornamentals, fruit trees, hops, cotton and strawberries.

The term "fungus reducing agent" or "fungal reducing agent" refers hereinafter to chemical fungus reducing agents such as a natural or synthetic fungicide, or to a biological fungus reducing agent such as a population of a mite species producing antifungal exudates, or a population of mycophagous mites, in particular selected from the Astigmata, for example populations of living *Carpoglyphus lactis* or *Lepidoglyphus destructor* individuals. Such fungus reducing mite populations are disclosed in WO2013/103294.

It is within the scope of the current invention that the rearing composition as defined in any of the above is absent of or is lacking addition of a fungus reducing agent. It is noted that non-viable Astigmata mite developmental stages are incapable of producing or secreting a fungus reducing agent.

The present invention provides an unexpected technological solution for the problem of mass rearing predatory mites or insects, especially of the Phytoseiidae family, for example of the *Phytoseiulus, Amblyseius* or *Neoseiulus* genus, *e*.*g*. the most frequently used predatory mite for controling pests in greenhouse and outdoor crops, *Phytoseiulus persimilis* (*P. persimilis*), *Amblyseius swirskii* (*A. swirskii*) and *Neoseiulus californicus* (*N. californicus*)*.* The mass rearing of the predatory mites or insects, with the food source of the present invention, is in an efficient and cost effective manner. The solution is based upon using a mixture of mite developmental stages, preferably, non-hatching (immobilized or dead), in particular frozen, eggs and mobile juvenile stages such as larvae and nymphs, together with inert carrier particles, processed in a specific form or type of MCC and/or IMCC, as a factitious host for predatory mites or insects desirable for the control of crop pests. Contrary to the predatory mites' natural prey, e.g. spider mites, non- *Tetranychus* mite developmental stages, preferably immobilized non- *Tetranychus* mite developmental stages, such as non-hatching eggs (e.g. due to immobilization by freezing), e.g. of Astigmatids, in particular *C*. *lactis,* maintain their nutritional value. The specific production process of the prey (e.g. non- *Tetranychus* mite prey), in MCC or IMCC form, namely, carrier material particles coated by mite developmental stages such as eggs and larvae or nymphs, particularly, immobilized (dead, e.g. frozen), enhances the availability of the prey to the predator individuals and thus improves the reproduction rate and rearing efficiency of the predator population used as biological control agent (BCA). This innovative solution enables cost effective logistics of the BCA, purer and more easily and/or accurately managed and counted/weighted raw material used as food source for the predatory mites or insects and the prolonged release of predatory mites or insects from a container or a mixture combining the predatory mite and/or insect with its factitious host, applied directly on the crop plant for controlling pests.

It is within the scope of the present invention that alternative mite or insect compositions/ products could be achieved by the process for producing a food source for predatory mites, of the present invention:
1. A food source product containing prey mites in MCC and/or IMCC (Immobilized Mite- Coated Carrier) processed form.
2. A product containing predatory mites and/or insects together with the food source containing prey mites in MCC and/or IMCC processed form..
3. A dried and sieved product (preferably packaged) containing predatory mites and/or insects, together with the food source containing prey mites in MCC and/or IMCC processed form extracted from the carrier materia particles.
4. A dried product, preferably packaged in bottles, containing predatory mites and/or insects, together with the food source containing prey mites in MCC and/or IMCC processed form extracted from the carrier material particles and mixed with additional/ supplemental carrier material to obtain a predetermined weight/ concentration / amount/ volume of the predatory mites and/or insects.
5. A product as described in section 2, mixed with carrier material particles and additionally comprising prey mites in MCC and/or IMCC processed form, to achieve a predetermined weight/ concentration / amount/ volume of the predatory mites and/or insects and/or ratio of predatory mites and/or insects to their food source. The aforementioned product may be packaged in sachets.

In order to understand the invention and to see how it may be implemented in practice, a plurality of preferred embodiments will now be described, by way of non-limiting example only, with reference to the following examples.

### EXAMPLE 1

### The effect of feeding with Immobilized Mite- Coated Carrier (IMCC) on the mass rearing of the predatory mite Amblyseius swirskii

Methods used in the below experiments:
The rearing in this example was performed by feeding *Amblyseius swirskii* (*A. swirskii*) predatory population with a mixture comprising immobilized selected developmental stages of *Carpoglyphus lactis* (*C. lactis*) prey and sawdust or any other carrier material particles (e.g. bran). This mixture was prepared by adhering *C*. *lactis* individuals containing mostly eggs and larvae (2-25% larvae of total mite developmental stages containing eggs and larvae, by number) to carrier material particles. In the resultant mixture, the carrier particles were essentially coated with the mite individuals. The *C*. *lactis* prey mixture was immobilized by freezing (e.g. at -18 °C to -20°C), prior to using them as feed for the predatory mites. The obtained food product is herein referred to as *C*. *lactis* Immobilized Mite- Coated Carrier (*C*. *lactis* IMCC).

Exemplified growth conditions:
Temperature: in the range of 18 °C -30°C, such as about 22°C.
Humidity: above 60%, such as about 85%.

In general, once or twice a week the mixture was weighed, and four samples containing about 50 mg were taken, placed on a black adhesive tape and counted. Total population size was calculated according to these counts and 1500 individuals were left in the rearing each week. The multiplication rate was calculated by dividing the total number of the individuals found by 1500, giving the factor by which the population multiplied during this week. To switch to a daily multiplication rate, the 7th root of this number was taken according to the following formula: $λ = \sqrt[t]{\frac{N \left(t\right.}{N \left(0\right)}}$

Where, λ is the daily multiplication rate, N(0) is the number of mites left in the rearing in the former count (1500 in this case), N(t) is the number of mites found at the current count, and t=7.

### Regime 1: Feeding with C. lactis IMCC in a sporadic/ occasional way

In this experiment, three rearing population lines were maintained for 5-6 weeks each. The rearing population lines were treated and counted twice a week, and fed with living *Carpoglyphus lactis* (*C. lactis*)*.* In about half (e.g. 30-50%) of the feeding events, *C*. *lactis* was given in an IMCC-type form as a food source to the predatory mites (instead of living *C*. *lactis*)*.*

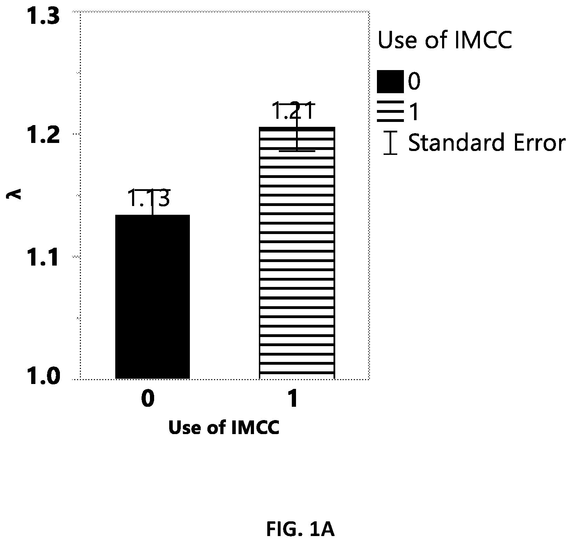

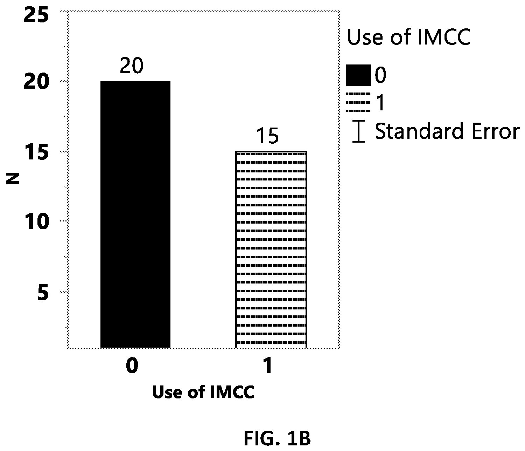

Reference is now made to Fig. 1, graphically presenting the effect of using a food source in the IMCC-type form (e.g. *C. lactis* IMCC) on the daily reproduction rate (λ) of *A*. *swirskii,* as compared to feeding with a living prey mite population (living *C*. *lactis*), not in the form of MCC or IMCC. Fig. 1A presents average λ values of the populations measured after each of the feeding type used (1- *C*. *lactis* in IMCC form, 0- living *C*. *lactis* not in MCC/IMCC form). The graph represents the means and the standard error found in the λ values during the trial. Fig. 1B presents the number of observations (N) of the populations after each feeding type made in the experiment. The feeding type may be either with living *C*. *lactis* not formulated in IMCC form (repredented by solid columns /bar and marked with '0' in Figs 1A and B) or after feeding with *C*. *lactis* IMCC (repredented by dashed bar and marked with '1' in Figs 1A and B).

As presented in Fig. 1, average population counts after IMCC addition showed a significantly higher daily reproduction rate (λ) than after feeding the predatory mites with *C*. *lactis* not in IMCC form. This experiment demonstrates that as a result of feeding with *C*. *lactis* in a Mite- Coated Carrier form, *A*. *swirskii* population was increased by an average of about 21% per day and showed an increased daily reproduction rate of about 8% relative to the control population reared using living *C*. *lactis* as the sole food source (in Fig. 1A, *0*/*1*: 1.13/1.21). It was further shown that attempts to increase the amount of food by supplying higher amounts of living *C*. *lactis* to the predatory mites, caused imbalance between the *A*. *swirskii* population and the *C*. *lactis* prey, and did not improve the daily reproduction rate (λ).

### Regime 2: Feeding with IMCC in a continuous way

In this experiment, 10 *A*. *swirskii* predatory rearing population lines were maintained with a continuous *C*. *lactis* IMCC feeding. These rearing populations reached an average predator density of 1299 mobile mites/gram (n=20 counts in total). This density value was significantly higher than the three rearing population lines described above that were fed with *C*. *lactis* IMCC only occasionally or sporadically during rearing process (Regime 1 above), and reached a predator density of 859 mobile mites/gram (n=35 counts in total).

### EXAMPLE 2

### Effect of feeding Phytoseiulus persimilis predatory population with C. lactis in IMCC form as a prey

An exemplified population within the scope of the present invention is the *Phytoseiulus* species predatory mite populations, e.g. *P. persimilis* population as herein disclosed. In a specific embodiment, a population adapted to rearing on *C*. *lactis* as a prey was reproduced and selected on a non-Tetranychid mite prey, preferably on an immobilized non-Tetranychid mite prey, such as on a non-phytophagous prey, preferably on an Astigmatid prey, most preferably on an immobilized Astigmatid prey, such as an immobilized Astigmatid prey, in particular a *Carpoglyhus* prey, having immobilized life stages comprising immobilized eggs. In some aspects of the invention, the adapted population is characterized by improved reproduction on the non-Tetranychid mite prey, defined herein by parameters such as daily reproduction rate, daily oviposition rate, female and/or juvenile survival rate and percentage of female individuals capable of reproducing on the non-Tetranychid mite prey. This is in contrast to a *Phytoseiulus* species predatory mite population, e.g. *P. persimilis* population reared on its natural host, namely Tetranychid arthropod prey, or spider mites as the sole food source.

In this example, *Phytoseiulus persimilis* (*P. persimilis*) population adapted to rearing on C. *lactis* as a prey (see the disclosure of WO2019171374) was tested in a two factorial trial. The first factor was the amount of food provided - high or low (the higher amount was twice than the lower amount). The second factor was the feeding method - either as IMCC-type form, or as a feeding mixture comprising immobilized (dead) mite developmental stages and carrier material particles administered in an unprocessed form, specifically not in IMCC-type form. It is noted that equivalent (equal) amounts of food (prey mite developmental stages) and carrier material particles were supplied in both feeding methods. Feeding of the rearing population lines was maintained for 5 weeks, and the population lines were counted every week (4 counting occasions for each population).

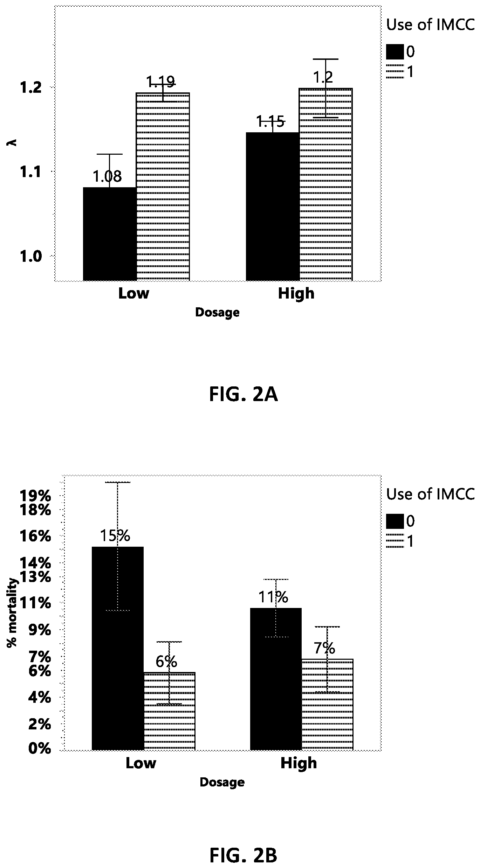

Reference is now made to Fig. 2, graphically presenting the effect of feeding *P*. *persimilis* population with immobilized (dead) *C*. *lactis* either in the IMCC form, or without IMCC processing, namely, as a food material and carrier material particles, separately. Fig. 2A presents daily reproduction rate values (λ) and Fig. 2B shows mortality rates of the rearing populations. In both graphs, each error bar is calculated using one standard error from the mean.

It can be seen in Fig. 2 that in both dosages (high and low), feeding with dead *C*. *lactis* in IMCC form resulted in higher reproduction rate lambda values and lower mortality rates relative to feeding with the same food (dead *C*. *lactis*), at the same concentrations, not processed to be in a IMCC form. This demonstrates that the processing of the prey mites to be in IMCC form by the method of the present invention, significantly improves the reproduction rate values and rearing capacity of the predatory mites or insects feeding on this type of nutrient source.

### EXAMPLE 3

### Effect of feeding Neoseiulus californicus predatory population with C. lactis in IMCC form as a prey

In this example, *Neoseiulus californicus (N. californicus)* predatory mite population was maintained on C. *lactis* IMCC, and counted twice a week for 12 weeks. It was observed that the population reached an average daily reproduction rate value (λ) was 1.25.

### EXAMPLE 4

### Effect of feeding Neoseiulus cucumeris predatory population with C. lactis in IMCC form as a prey

In this example, *Neoseiulus cucumeris (N. cucumeris)* predatory mite population was maintained on *C*. *lactis* IMCC, and counted once a week for four weeks. It was observed that the average daily reproduction rate value (λ) was 1.22.

### EXAMPLE 5

### Rearing the predatory insect Orius laevigatus on MCC-type prey

This example describes the rearing of the predatory insect *Orius laevigatus* on MCC as a nutrient source.

In the experiment, a beanpod was placed with a predefined number of O. *laevigatus* eggs in a ventilated box with carrier material particles to prevent cannibalism. The feeding with MCC was performed 2-3 times a week for 2 weeks. Then the *O*. *laevigatus* adults that completed development were counted, so that the percentage of bugs reaching adulthood when reared on the MCC food can be calculated. Alternatively or additionally, oviposition rate or egg production rate of the insect population reared on MCC food was measured.

To summarize, the results above clearly show that by rearing predatory mite and/or insect populations on mite prey processed in the mixed carrier- MCC or IMCC form of the present invention, enhanced reproduction rate of the predatory mite or insect population were achieved. This demonstrates that the present invention provides a unique process for producing and serving a food source for predatory mites and insects to reach efficient desirable growth rates of the population. The production process of the food source, results in a product that is much more available to the predator and therefore markedly enhance and improve the predator's reproduction capability. Feeding predarory mites and/or insect populations with MCC or IMCC as a food source, results in increased mass rearing capacity of the predatory population for usage as biological control agents to fight crop pests.

### EXAMPLE 6

### Process for production of MCC food source for predatory mites and insects

Reference is now made to a process for the production of the Mite- Coated Carrier (MCC) food product of the present invention as a nutrient source for rearing predatory mites and insects. In the current example, C. *lactis* (CL) is used as the prey species for the predatory mite or insect population, for example, *P. persimilis* predatory population. It is emphasized that the process detailed below is applicable to any Astigmatid mite species, and moreover to any mite species (not within the Astigmata group) useful as a prey for predatory mites and/or insects. It is further applicable to any predatory mite or insect species capable of reproducing on the preselected prey mite species processed by the method of the present invention.

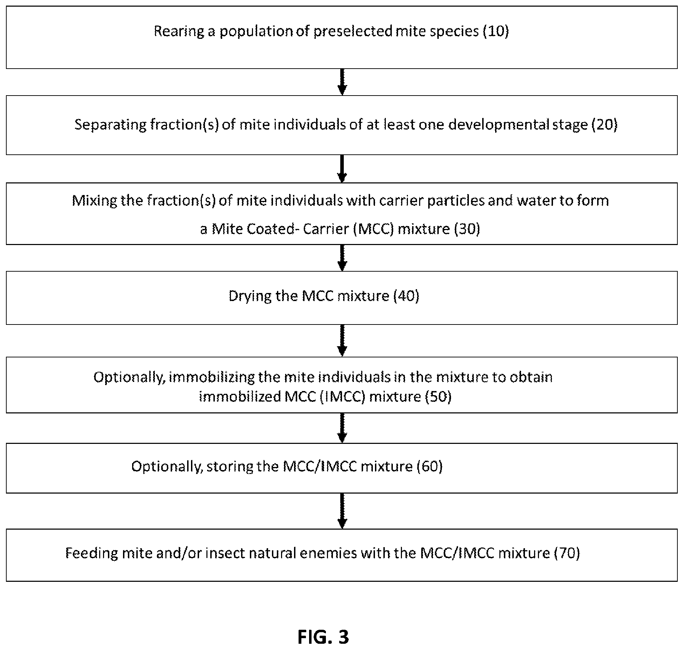

According to one embodiment, the process includes the following steps, as depicted in Fig. 3:
a. Rearing a population of preselected mite species, e.g. Astigmatid mite species, such as *C*. *lactis* (CL), or any mite species suitable as being a prey or a nutrient source for predatory mite and/or insect **(10).**
b. Obtaining a fraction of prey mite individuals of one or more developmental life stages of the mite population, for example, a fraction containing mostly eggs and larvae life stages. The fraction can be obtained by separation means such as by sieving (e.g. according to the size of the mite individuals), or by other mechanical process, or by behavioral manipulation **(20).** According to an embodiment of the present invention, the obtained fraction of prey mite individuals is essentially devoid of or separated from the prey population's rearing medium.
c. Mixing the separated fraction(s) of prey mite individuals with carrier particles (specifically particles of an inert carrier material such as sawdust) and water, so that the prey mite individuals coat the carrier's particles to form a Mite Coated- Carrier (MCC) mixture **(30).** It is noted that in this embodiment, the mite individuals (for example mite eggs and juvenile developmental stages such as larvae and/or nymphs) adhere to the surface of the carrier particles to essentially coat or cover the carrier particles.
d. Drying the wet MCC mixture **(40),** and optionally, obtaining a sample to assess the percentage of the desired developmental stage in the mixture, for example eggs/larvae percentage in the mixture. In a specific embodiment of the present invention, the mixture contains at least 50% eggs, preferably at least 75% -98% eggs (by number) out of the total mite individuals (eggs and larvae) within the mixture [eggs/ (larvae + eggs)].
e. Optionally, immobilizing the mite individuals in the mixture to obtain Immobilized MCC (IMCC) mixture **(50).** According to one aspect of the present invention, the immobilization may be performed by freezing the MCC mixture at about -18 to -20°C.
f. Optionally, storing the MCC or IMCC mixture **(60).**
g. Feeding mite and/or insect natural enemies with the MCC/IMCC mixture **(70).**

The method detailed above may further comprise steps of adding carrier material particles (e.g. sawdust) to the IMCC and/or MCC mixture, to obtain a predefined concentration (e.g. number or weight of mite life stages per total number/volume/weight) of IMCC and/or MCC mixture ready to be served as a food source for predatory mites or insects.

It is further within the scope of the present invention that the method detailed above may further comprise steps of adding mite life stages (live or dead) to the MCC and/or IMCC mixture, to obtain a predefined concentration (e.g. number or weight of mite life stages per total number/volume/weight) of MCC and/or IMCC mixture, ready to be served as a food source for predatory mites or insects.

According to further aspects of the present invention, the processing or use of the MCC and/or IMCC food source may further comprise rearing the predatory-mite or insect population with the IMCC and/or MCC food source for a predetermined rearing period to produce a biological control composition comprising predatory mite or insect population with MCC and/or IMCC mixture, as a food source for the predatory population.

According to further aspects of the present invention, a biological control composition comprising the MCC and/or IMCC mixture with a predatory mite or insect population is provided. This composition may be further processed by sieving the composition to remove the carrier material particles. The resultant predatory mites or insects may be (1) packaged as a biological control product in a device or container-type suitable to be used in this kind of mite or insect rearing, delivery and release systems for crop protection, or (2) mixed with a predefined amount of a carrier material and packaged in bottles or other suitable container or device or container-type used in this kind of mite or insect rearing, delivery and release systems for crop protection.

In this example, the percentage of C. *lactis* larvae in various stages throughout the production process of the MCC and/or IMCC product as a food source for *P. persimilis* rearing population, was assessed. The results are listed in Table 1.

**Table 1: C. lactis larvae percentage in IMCC production process**

| **Product type** | ***C. lactis* larvae percentage out of mite individuals [larvae/ (larvae + eggs)]** |
|---|---|
| *P. persimilis* population reared on *C. lactis* in IMCC form sieved product (referred to as product A) | 18% |
| Product A mixed with a carrier material | 22% |
| Unsieved *P. persimilis* population reared on *C. lactis* in IMCC form and mixed with a carrier material | 14% |
| IMCC mixture with added carrier material | 15% |
| *P. persimilis* population reared on *C. lactis* in IMCC form | 13% |

As can be seen, the results presented in Table 1 show that throughout the production process of the *C*. *lactis* IMCC food source, the final and intermediate products contain the selected life stages, for example eggs and larvae mixture, in percentage or ratio of [larvae/ (larvae + eggs)] within the range defined as 2-25%. In other words, the percentage of eggs (out of larvae + eggs) in the products provided as a feed for predatory mites or insects is within the range of 75-98%.

## Claims

1. A food source for predatory mites and/or insects comprising a mixture of carrier material particles and individuals of at least one mite species suitable as being a prey for said predatory mites and/or insects, **characterized in that** said mixture is formulated in a Mite-Coated Carrier (MCC) form, such that at least 50% of the surface formed by the carrier material particles is coated by said prey individuals , wherein the individuals of the at least one mite species are not exclusively eggs thereof.

2. The food source according to claim 1, wherein
at least a portion of said prey individuals is immobilized to form Immobilized MCC (IMCC) mixture.

3. The food source according to claim 1, wherein said food source comprises eggs, or mobile developmental stages, or a combination thereof; and/or
wherein said carrier material particles are selected from the group consisting of particles of sawdust, vermiculite, bran, wheat bran, buckwheat husks, rice husks or millet husks, or comprising a mixture thereof, or any other inert carrier material particles comprising surfaces to which mites can adhere.

4. The food source according to claim 3, wherein at least one of the following holds true:
a. said eggs represent a ratio of at least 50%, such as at least 60 %, at least 70%, at least 80%, at least 90% of the total prey individuals, by number; and
b. said prey mobile developmental stages represent a ratio of 1-50%, preferably 2-25%, more preferably 2-15% of the total prey individuals, by number.

5. The food source according to claim 1, wherein said predatory mite species is selected from the order Mesostigmata, such as from at least one family selected from Phytoseiidae. Laelapidae, Blattisociidae, Ascidae, Rhodocaridae and Parasitidae, or from the order Trombidiformes, such as from the Prostigmata suborder, e.g. the family Anystidae or Cheyletidae,
wherein said predatory mite species is selected from the Phytoseiidae family, such as from the subfamily Amblyseiinae, Phytoseiinae and Typhlodrominae,
wherein said predatory mite species is selected from the group consisting of: the genus *Amblyseius,* such as *Amblyseius swirskii,* the genus *Neoseiulus,* such as *Neoseiulus californicus* and *Neoseiulus cucumeris,* the genus *Amblydromalus,* such as *Amblydromalus limonicus,* the genus *Transeius* such as *Transeius montdorensis,* and the genus *Phytoseiulus,* such as *Phytoseiulus persimilis,* or
wherein said predatory mite species is selected from Mesostigmatid mite species such as selected from:
i) Phytoseiidae such as from: the subfamily of the Amblyseiinae, such as from the genus *Amblyseius,* e.g. *Amblyseius andersoni, Amblyseius aerialis, Amblyseius swirskii, Amblyseius herbicolus* or *Amblyseius largoensis,* from the genus *Euseius* e.g. *Euseius finlandicus, Euseius hibisci, Euseius ovalis, Euseius victoriensis, Euseius stipulatus, Euseius scutalis, Euseius tularensis, Euseius addoensis, Euseius concordis, Euseius ho* or *Euseius citri,* from the genus *Neoseiulus* e.g. *Neoseiulus barkeri, Neoseiulus califormicus, Neoseiulus cucumeris, Neoseiulus longispinosus, Neoseiulus womersleyi, Neoseiulus idaeus, Neoseiulus anonymus, Neoseiulus paspalivorus, Neoseiulus reductus* or *Neoseiulus fallacis,* from the genus *Amblydromalus* e.g. *Amblydromalus limonicus* from the genus *Typhlodromalus* e.g. *Typhlodromalus aripo, Typhlodromalus laila* or *Typhlodromalus peregrinus* from the genus *Typhlodromips* e.g. *Typhlodromips montdorensis,* from the genus *Phytoseiulus,* e.g. *Phytoseiulus persimilis, Phytoseiulus macropilis, Phytoseiulus longipes, Phytoseiulus fragariae;* the subfamily of the Typhlodrominae, such as from the genus *Galendromus* e.g. *Galendromus occidentalis,* from the genus *Typhlodromus* e.g. *Typhlodromus pyri, Typhlodromus doreenae* or *Typhlodromus athiasae;*
ii) Ascidae such as from the genus *Proctolaelaps,* such as *Proctolaelaps pygmaeus* (Muller); from the genus *Blattisocius* e.g. *Blattisocius tarsalis* (Berlese), *Blattisocius keegani* (Fox); from the genus *Lasioseius* e.g. *Lasioseius fimetorum* Karg, *Lasioseius floridensis* Berlese, *Lasioseius bispinosus* Evans, *Lasioseius dentatus* Fox, *Lasioseius scapulatus* (Kenett), *Lasioseius athiasae* Nawar & Nasr; from the genus *Arctoseius* e.g. *Arctoseius semiscissus* (Berlese); from the genus *Protogamasellus* e.g. *Protogamasellus dioscorus* Manson;
iii) Laelapidae such as from the genus *Stratiolaelaps* e.g. *Stratiolaelaps scimitus* (Womersley) (also placed in the genus *Hypoaspis); Geolaelaps* e.g. *Geolaelaps aculeifer* (Canestrini) (also placed in the genus *Hypoaspis); Androlaelaps* e.g. *Androlaelaps casalis casalis* (Berlese);
iv) Macrochelidae such as from the genus *Macrocheles* e.g. *Macrocheles robustulus* (Berlese), *Macrocheles*
*muscaedomesticae* (Scopoli), *Macrocheles matrius* (Hull);
v) Parasitidae such as from the genus *Pergamasus* e.g. *Pergamasus quisquiliarum* Canestrini; *Parasitus* e.g. *Parasitus*
*fimetorum* (Berlese), *Parasitus bituberosus* Karg;
vi) Prostigmatid mite species such as from: Tydeidae such as from the genus *Homeopronematus* e.g. *Homeopronematus anconai* (Baker); from the genus *Tydeus* e.g. *Tydeus lambi* (Baker), *Tydeus caudatus* (Dugés); from the genus *Pronematus* e.g. *Pronematus ubiquitous* (McGregor); Cheyletidae such as from the genus *Cheyletus* e.g. *Cheyletus eruditus* (Schrank), *Cheyletus malaccensis* Oudemans; Cunaxidae such as from the genus *Coleoscirus* e.g. *Coleoscirus simplex* (Ewing), from the genus *Cunaxa* e.g. *Cunaxa setirostris* (Hermann); Erythraeidae such as from the genus *Balaustium* e.g. *Balaustium putmani* Smiley, *Balaustium medicagoense* Meyer & Ryke, *Balaustium murorum* (Hermann); Stigmaeidae such as from the genus *Agistemus* e.g. *Agistemus exsertus* Gonzalez; such as from the genus *Zetzellia* e.g. *Zetzellia mali* (Ewing).

6. The food source according to claim 1, wherein at least one of the following holds true:
a. said predatory insect species is selected from the order i) Coleoptera, such as the family Coccinelidae, e.g. *Stethorus punctillum,* ii) Heteroptera, such as the family Anthocoridae, e.g. *Orius laevigatus,* the family Miridae, e.g. *Nesidiocoris tenuis* and *Macrolophus pygmaeus,* iii) Neuroptera such as the family Chrysopidae, e.g. *Chrysoperla carnea,* iv) Thysanoptera, such as the family Thripidae e.g. *Scolothrips sexmaculatus,* v) Diptera, such as the family Syrphidae, e.g. *Episyrphus balteatus,* and vi) Mantodea, such as the family Mantidae (Mantids); and
b. wherein said at least one prey species is a non-Tetranychid mite, such as a mite species belonging to the order Astigmata.

7. The food source according to claim 6, wherein said Astigmata prey species is at least one of the following:
a. selected from members of the family Acaridae, Carpoglyphidae, Glycyphagidae, and/or from the family Chortoglyphagidae;
b. selected from members of a genus such as *Acarus, Tyrophagus, Aleuroglyphus, Lardoglyphus, Caloglyphus, Suidasia, Thyreophagus, Carpoglyphus, Glycyphagus, Lepidoglyphus, Blomia,* and/or *Chortoglyphus;*
c. selected from: *Acarus siro, Acarus farris, Acarus immobilis, Acarus chaetoxysilos, Tyrophagus longior, Tyrophagus similis, Tyrophagus putrescentiae, Tyrophagus communis, Aleuroglyphus ovatus, Lardoglyphus konoi, Caloglyphus mycophagus, Suidasia nesbitti, Thyreophagus entomophagus, Carpoglyphus lactis, Carpoglyphus munroi, Glycyphagus domesticus, Lepidoglyphus destructor, Blomia freeman, Blomia tropicalis and*/*or Chortoglyphus arcuatus*; and
d. selected from:
i) Carpoglyphidae such as from the genus *Carpoglyphus e.g. Carpoglyphus lactis;*
ii) Pyroglyphidae such as from the genus *Dermatophagoides* e.g. *Dermatophagoides pteronysinus, Dermatophagoides 59reema*; from the genus *Euroglyphus* e.g. *Euroglyphus longior, Euroglyphus maynei;* from the genus *Pyroglyphus* e.g. *Pyroglyphus africanus*;
iii) Glycyphagidae such as from the subfamily *Ctenoglyphinae,* such as from the genus *Diamesoglyphus* e.g. *Diamesoglyphus intermediusor* from the genus *Ctenoglyphus,* e.g. *Ctenoglyphus plumiger, Ctenoglyphus canestrinii, Ctenoglyphus palmifer;* the subfamily *Glycyphaginae,* such as from the genus *Blomia,* e.g. *Blomia 60reeman* or from the genus *Glycyphagus,* e.g. *Glycyphagus ornatus, Glycyphagus bicaudatus, Glycyphagus privatus, Glycyphagus domesticus,* or from the genus *Lepidoglyphus* e.g. *Lepidoglyphus michaeli, Lepidoglyphus fustifer, Lepidoglyphus destructor,* or from the genus *Austroglycyphagus,* e.g. *Austroglycyphagus geniculatus;* from the subfamily *Aëroglyphinae,* such as from the genus *Aëroglyphus,* e.g. *Aëroglyphus robustus;* from the subfamily *Labidophorinae,* such as from the genus *Gohieria,* e.g. *Gohieria. Fusca;* or from the subfamily *Nycteriglyphinae* such as from the genus *Coproglyphus,* e.g. *Coproglyphus stammeri* or from the subfamily *Chortoglyphidae,* such as the genus *Chortoglyphus* e.g. *Chortoglyphus arcuatus* and more preferably is selected from the subfamily *Glycyphaginae,* more preferably is selected from the genus *Glycyphagus* or the genus *Lepidoglyphus* most preferably selected from *Glycyphagus domesticus or Lepidoglyphus destructor;*
iv) Acaridae such as from the genus *Tyrophagus* e.g. *Tyrophagus putrescentiae, Tyrophagus tropicus, Tyrophagus communis* from the genus *Acarus* e.g. *Acarus siro, Acarus farris, Acarus gracilis;* from the genus *Lardoglyphus* e.g. *Lardoglyphus konoi,* from the genus *Thyreophagus,* such as *Thyreophagus entomophagus;* from the genus *Aleuroglyphus,* e.g. *Aleuroglyphus ovatus;*
v) Suidasiidae such as from the genus *Suidasia,* such as *Suidasia nesbiti, Suidasia pontifica or Suidasia medanensis.*

8. The food source according to any one of claims 1-7, wherein said food source is at least one of the following:
a. additionally comprising dead or alive prey mite individuals in a non-MCC or non-IMCC form; and
b. contained in a container such as a sachet, a bottle or any other packaging type container or device configured to holding the food source with or without a predatory mite or insect population preying on said food source.

9. A method for producing a food source for predatory mites and/or insects, according to any one of claims 1-8, wherein the method comprises steps of:
a. providing a rearing population of at least one mite species suitable as being a prey for a preselected predatory mite or insect species, said rearing population comprising individuals of the at least one prey species, preferably together with a suitable nutrient source for the prey mite individuals;
b. obtaining at least one preselected developmental stage fraction of said prey population by separating means;
c. mixing the obtained fraction with carrier material particles (e.g. sawdust) and with water, so that the prey mite individuals coat at least 50% of the surface formed by the carrier material particles to form a Mite- Coated Carrier (MCC) type mixture;
d. drying said MCC type mixture;
e. optionally, immobilizing at least a portion of said mite individuals to obtain Immobilized Mite- Coated Carrier (IMCC) type mixture to be used as a food source for said preselected predatory mite and/or insect species.

10. The method according to claim 9, further comprises steps of:
f. mixing said MCC or IMCC mixture with a predatory mite or insect population capable of preying on said prey mite species;
g. rearing said predatory population on said MCC or IMCC mixture for a predetermined period of time to obtain a rearing product;
h. optionally, mixing said rearing product with a carrier material; and
i. packaging said rearing product of step (g) or said mixture of step (h) in predetermined amounts and/or concentration.

11. The method according to any one of claims 9 and 10, wherein the method further comprises steps of
a. separating juvenile developmental stages such as larvae and/or nymphs or a combination of said juvenile developmental stages together with eggs, from the preselected prey rearing population;
b. mixing the separated, juvenile developmental stages such as larvae and/or nymphs or a combination of said juvenile developmental stages together with eggs, with carrier material particles, such as a carrier material selected from particles of sawdust, wheat bran, buckwheat husks, rice husks or millet husks, or comprising a mixture thereof, and water, so as to essentially coat the carrier material with the prey mite individuals so as to form a Mite- Coated Carrier (MCC) type mixture as defined in any one of claims 1-8;
c. freezing the mixture of step (b); and
d. rearing the predatory mite or insect individuals on the mixture as a food source.

12. A rearing composition comprising a predatory mite and/or insect population, together with the food source according to any one of claims 1-8,
preferably wherein the food source comprises immobilized Astigmatid prey species, in particular a *Carpoglyhus* species, having life stages comprising mostly eggs and larvae and/or nymphs, such that said carrier material particles are coated by said immobilized, preferably freezed, mite life stages.

13. A composition comprising a predatory mite and/or insect population and a food source according to any one of claims 1-8, wherein said predatory mite or insect population is capable preying on said food source.

14. Method for rearing predatory mite or insect individuals, said method comprising providing a composition according to claim 13, or a composition according to claim 12 and allowing the predatory mite or insect individuals to prey on the food source.

15. A device for containing and releasing predatory mite or insect individuals comprising a rearing composition according to claim 12 or a composition according to claim 13, wherein the device comprises an exit for mobile life stages of predatory mite or insect species, preferably an exit suitable for providing a sustained release of a number of mobile life stages.

16. Use of a rearing composition according to claim 12 or a composition according to claim 13, preferably in a device according to claim 15, for crop protection against pests.

## Patentansprüche

1. Nahrungsquelle für Raubmilben und/oder Insekten, bestehend aus einer Mischung aus Partikeln eines Trägermaterials und Individuen mindestens einer Milbenart, die als Beute für die genannten Raubmilben und/oder Insekten geeignet sind, **dadurch gekennzeichnet, dass** die genannte Mischung in Form eines Milben beschichteten Trägers, MCC, vorliegt, sodass mindestens 50% der von den Trägermaterialpartikeln gebildeten Oberfläche mit den Beutetieren beschichtet sind, worin die Individuen der mindestens einen Milbenart nicht ausschließlich deren Eier sind.

2. Nahrungsquelle gemäß Anspruch 1, worin mindestens ein Teil der Beutetiere immobilisiert ist, um eine mit immobilisierten Milben beschichteten Träger-, IMCC, Mischung zu bilden.

3. Nahrungsquelle gemäß Anspruch 1, worin die Nahrungsquelle Eier oder mobile Entwicklungsstadien oder eine Kombination davon umfasst; und/oder
worin die Trägermaterialpartikel ausgewählt sind aus der Gruppe bestehend aus Partikeln aus Sägemehl, Vermiculit, Kleie, Weizenkleie, Buchweizenschalen, Reisschalen oder Hirseschalen besteht, oder eine Mischung davon umfasst, oder aus beliebigen anderen inerten Trägermaterialpartikeln, die Oberflächen aufweisen, an denen sich Milben festsetzen können.

4. Nahrungsquelle gemäß Anspruch 3, worin mindestens eine der folgenden Bedingungen zutrifft:
a. die Eier machen einen Anteil von mindestens 50%, beispielsweise mindestens 60%, mindestens 70%, mindestens 80% oder mindestens 90% der Gesamtzahl der Beutetiere aus; und
b. die beweglichen Entwicklungsstadien der Beute machen einen Anteil von 1-50%, vorzugsweise 2-25%, noch bevorzugter 2-15% der Gesamtzahl der Beutetiere ausmachen.

5. Nahrungsquelle gemäß Anspruch 1, worin die Raubmilbenart aus der Ordnung Mesostigmata ausgewählt ist, beispielsweise aus mindestens einer Familie, ausgewählt unter den Phytoseiidae, Laelapidae, Blattisociidae, Ascidae, Rhodocaridae und Parasitidae, oder aus der Ordnung Trombidiformes, beispielsweise aus der Unterordnung Prostigmata, z. B. der Familie Anystidae oder Cheyletidae,
worin die Raubmilbenart ausgewählt ist aus der Familie der Phytoseiidae, beispielsweise aus den Unterfamilien Amblyseiinae, Phytoseiinae und Typhlodrominae,
worin die Raubmilbenart ausgewählt ist aus der Gruppe bestehend aus der Gattung *Amblyseius*, wie beispielsweise *Amblyseius swirskii*, der Gattung *Neoseiulus*, wie beispielsweise *Neoseiulus californicus* und *Neoseiulus cucumeris*, der Gattung *Amblydromalus*, wie beispielsweise *Amblydromalus limonicus*, der Gattung *Transeius*, wie beispielsweise *Transeius montdorensis*, und der Gattung *Phytoseiulus*, wie beispielsweise *Phytoseiulus persimilis*, oder
worin die Raubmilbenart ausgewählt ist unter Mesostigmatiden-Milbenarten, wie beispielsweise unter:
i) Phytoseiidae wie aus der Unterfamilie der Amblyseiinae, wie aus der Gattung *Amblyseius*, z.B. *Amblyseius andersoni, Amblyseius aerialis, Amblyseius swirskii, Amblyseius herbicolus* oder *Amblyseius largoensis*, aus der Gattung *Euseius* z.B. *Euseius finlandicus, Euseius hibisci, Euseius ovalis, Euseius victoriensis, Euseius stipulatus, Euseius scutalis, Euseius tularensis, Euseius addoensis, Euseius concordis, Euseius ho* oder *Euseius citri*, aus der Gattung *Neoseiulus* z.B. *Neoseiulus barkeri, Neoseiulus califormicus, Neoseiulus cucumeris, Neoseiulus longispinosus, Neoseiulus womersleyi, Neoseiulus idaeus, Neoseiulus anonymus, Neoseiulus paspalivorus, Neoseiulus reductus* oder *Neoseiulus fallacis*, aus der Gattung *Amblydromalus* z.B. *Amblydromalus limonicus* aus der Gattung *Typhlodromalus* z.B. *Typhlodromalus aripo, Typhlodromalus laila* oder *Typhlodromalus peregrinus* aus der Gattung *Typhlodromips* z.B. *Typhlodromips montdorensis*, aus der Gattung *Phytoseiulus*, z.B. *Phytoseiulus persimilis, Phytoseiulus macropilis, Phytoseiulus longipes, Phytoseiulus fragariae;* der Unterfamilie der Typhlodrominae, wie aus der Gattung *Galendromus* z.B. *Galendromus occidentalis*, aus der Gattung *Typhlodromus* z.B. *Typhlodromus pyri, Typhlodromus doreenae* oder *Typhlodromus athiasae;*
ii) Ascidae wie aus der Gattung *Proctolaelaps*, wie *Proctolaelaps pygmaeus* (Muller); aus der Gattung *Blattisocius* z.B. *Blattisocius tarsalis* (Berlese), *Blattisocius keegani* (Fox); aus der Gattung *Lasioseius* z.B. *Lasioseius fimetorum* Karg, *Lasioseius floridensis* Berlese, *Lasioseius bispinosus* Evans, *Lasioseius dentatus* Fox, *Lasioseius scapulatus* (Kenett), *Lasioseius athiasae* Nawar & Nasr; aus der Gattung *Arctoseius* z.B. *Arctoseius semiscissus* (Berlese); aus der Gattung *Protogamasellus* z.B. *Protogamasellus dioscorus* Manson;
iii) Laelapidae wie aus der Gattung *Stratiolaelaps* z.B. *Stratiolaelaps scimitus* (Womersley) (auch der Gattung *Hypoaspis* zugeordnet); *Geolaelaps* z.B. *Geolaelaps aculeifer* (Canestrini) (auch der Gattung *Hypoaspis* zugeordnet); *Androlaelaps* z.B. *Androlaelaps casalis* (Berlese);
iv) Macrochelidae wie aus der Gattung *Macrocheles* z.B. *Macrocheles robustulus* (Berlese), *Macrocheles muscaedomesticae* (Scopoli), *Macrocheles matrius* (Hull);
v) Parasitidae wie aus der Gattung *Pergamasus* z.B. *Pergamasus quisquiliarum* Canestrini; *Parasitus* z.B. *Parasitus fimetorum* (Berlese), *Parasitus bituberosus* Karg;
vi) Prostigmatiden-Milbenarten wie von den Tydeidae wie aus der Gattung *Homeopronematus* z.B. *Homeopronematus anconai* (Baker); aus der Gattung *Tydeus* z.B. *Tydeus lambi* (Baker), *Tydeus caudatus* (Dugés); aus der Gattung *Pronematus* z.B. *Pronematus ubiquitous* (McGregor); Cheyletidae wie aus der Gattung *Cheyletus* z.B. *Cheyletus eruditus* (Schrank), *Cheyletus malaccensis* Oudemans; Cunaxidae wie aus der Gattung *Coleoscirus* z.B. *Coleoscirus simplex* (Ewing), aus der Gattung *Cunaxa* z.B. *Cunaxa setirostris* (Hermann); Erythraeidae wie aus der Gattung *Balaustium* z.B. *Balaustium putmani* Smiley, *Balaustium medicagoense* Meyer & Ryke, *Balaustium murorum* (Hermann); Stigmaeidae wie aus der Gattung *Agistemus* z.B. *Agistemus exsertus* Gonzalez; wie aus der Gattung *Zetzellia* z.B. *Zetzellia mali* (Ewing).

6. Nahrungsquelle gemäß Anspruch 1, wobei mindestens eine der folgenden Bedingungen zutrifft:
a. die Raubinsektenart stammt aus der Ordnung i) Coleoptera, beispielsweise aus der Familie der Coccinelidae, z.B. *Stethorus punctillum*, ii) Heteroptera, wie die Familie Anthocoridae, z.B. *Orius laevigatus*, der Familie Miridae, z.B. *Nesidiocoris tenuis* und *Macrolophus pygmaeus*, iii) Neuroptera wie die Familie Chrysopidae, z.B. *Chrysoperla carnea*, iv) Thysanoptera, wie die Familie Thripidae z.B. *Scolothrips sexmaculatus*, v) Diptera, wie die Familie Syrphidae, z.B. *Episyrphus balteatus*, und vi) Mantodea, wie die Familie Mantidae (Mantiden); und
b. worin die mindestens eine Beuteart eine Milbe ist, die nicht zur Gattung Tetranychus gehört, wie beispielsweise eine Milbenart aus der Ordnung Astigmata.

7. Nahrungsquelle gemäß Anspruch 6, worin die Astigmata-Beuteart mindestens eine ist von:
a ausgewählt aus den Mitgliedern der Familien Acaridae, Carpoglyphidae, Glycyphagidae, und/oder der Familie Chortoglyphagidae;
b. ausgewählt aus den Vertretern einer Gattung wie beispielsweise *Acarus*, *Tyrophagus*, *Aleuroglyphus*, *Lardoglyphus*, *Caloglyphus*, *Suidasia*, *Thyreophagus*, *Carpoglyphus*, *Glycyphagus*, *Lepidoglyphus*, *Blomia*, und/oder *Chortoglyphus*;
c. ausgewählt unter: *Acarus siro, Acarus farris, Acarus immobilis, Acarus chaetoxysilos, Tyrophagus longior, Tyrophagus similis, Tyrophagus putrescentiae, Tyrophagus communis*, *Aleuroglyphus ovatus, Lardoglyphus konoi, Caloglyphus mycophagus, Suidasia nesbitti, Thyreophagus entomophagus, Carpoglyphus lactis, Carpoglyphus munroi, Glycyphagus domesticus, Lepidoglyphus destructor, Blomia freeman*, *Blomia tropicalis und*/*oder Chortoglyphus arcuatus*; und
d. ausgewählt unter:
i) Carpoglyphidae wie aus der Gattung *Carpoglyphus* z.B. *Carpoglyphus lactis*;
ii) Pyroglyphidae wie aus der Gattung *Dermatophagoides* z.B. *Dermatophagoides pteronysinus*, *Dermatophagoides 59reema*; aus der Gattung *Euroglyphus* z.B. *Euroglyphus longior, Euroglyphus maynei*; aus der Gattung *Pyroglyphus* z.B. *Pyroglyphus africanus*;
iii) Glycyphagidae wie aus der Unterfamilie *Ctenoglyphinae,* wie aus der Gattung *Diamesoglyphus* z.B. *Diamesoglyphus intermedius* oder aus der Gattung *Ctenoglyphus*, z.B. *Ctenoglyphus plumiger, Ctenoglyphus canestrinii, Ctenoglyphus palmifer;* der Unterfamilie Glycyphaginae, wie aus der Gattung *Blomia*, z.B. *Blomia 60reeman* oder aus der Gattung *Glycyphagus*, z.B. *Glycyphagus ornatus, Glycyphagus bicaudatus, Glycyphagus privatus, Glycyphagus domesticus,* oder aus der Gattung *Lepidoglyphus* z.B. *Lepidoglyphus michaeli, Lepidoglyphus fustifer, Lepidoglyphus destructor,* oder aus der Gattung *Austroglycyphagus*, z.B. *Austroglycyphagus geniculatus;* aus der Unterfamilie Aëroglyphinae*,* wie aus der Gattung *Aëroglyphus*, z.B. *Aëroglyphus robustus*; aus der Unterfamilie Labidophorinae*,* wie aus der Gattung *Gohieria*, z.B. *Gohieria fusca;* oder aus der Unterfamilie Nycteriglyphinae wie aus der Gattung *Coproglyphus*, z.B. *Coproglyphus stammeri* oder aus der Unterfamilie Chortoglyphidae*,* wie der Gattung *Chortoglyphus* z.B. *Chortoglyphus arcuatus* und noch mehr bevorzugt ausgewählt aus der Unterfamilie Glycyphaginae, noch mehr bevorzugt ausgewählt aus der Gattung *Glycyphagus* oder der Gattung *Lepidoglyphus* am meisten bevorzugt ausgewählt unter *Glycyphagus domesticus* oder *Lepidoglyphus destructor*;
iv) Acaridae wie aus der Gattung *Tyrophagus* z.B. *Tyrophagus putrescentiae*, *Tyrophagus tropicus*, *Tyrophagus communis* aus der Gattung *Acarus* z.B. *Acarus siro*, *Acarus farris, Acarus gracilis*; aus der Gattung *Lardoglyphus* z.B. *Lardoglyphus konoi,* aus der Gattung *Thyreophagus,* wie *Thyreophagus entomophagus*; aus der Gattung *Aleuroglyphus,* z.B. *Aleuroglyphus ovatus;*
v) Suidasiidae wie aus der Gattung *Suidasia*, wie *Suidasia nesbiti, Suidasia pontifica* oder *Suidasia medanensis.*

8. Nahrungsquelle gemäß einem der Ansprüche 1-7, worin die Nahrungsquelle mindestens eines der folgenden Elemente ist:
a. die zusätzlich tote oder lebende Beutemilbenindividuen in einer Nicht-MCC- oder Nicht-IMCC-Form umfasst; und
b. in einem Behälter wie einem Beutel, einer Flasche oder einem anderen verpackungsartigen Behälter oder einer Vorrichtung enthalten ist, der bzw. die so ausgestaltet ist, dass er bzw. sie die Nahrungsquelle mit oder ohne eine Population von Raubmilben oder Raubinsekten, die diese Nahrungsquelle bejagen, aufnimmt.

9. Verfahren zur Herstellung einer Nahrungsquelle für Raubmilben und/oder Raubinsekten gemäß einem der Ansprüche 1-8, wobei das Verfahren die Schritte umfasst:
a. Bereitstellen einer Zuchtpopulation mindestens einer Milbenart, die als Beute für eine vorab ausgewählte Raubmilben- oder Insektenart geeignet ist, wobei die Zuchtpopulation Individuen der mindestens einen Beuteart umfasst, vorzugsweise zusammen mit einer geeigneten Nährstoffquelle für die Beutemilbenindividuen;
b. Gewinnen mindestens einer vorab ausgewählten Fraktion eines Entwicklungsstadiums der Beutepopulation durch Trennverfahren;
c. Vermischen der erhaltenen Fraktion mit Partikeln eines Trägermaterials (z. B. Sägemehl) und mit Wasser, sodass die Beutemilben-Individuen im Wesentlichen mindestens 50% der von den Partikeln des Trägermaterials gebildeten Oberfläche bedecken, um eine Mischung vom Typ eines Milben beschichteten Trägers, MCC, zu bilden;
d. Trocknen der genannten MCC-Mischung;
e. wahlweise das Immobilisieren mindestens eines Teils der Milbenindividuen, um eine Mischung in Form eines immobilisierten Milben beschichteten Trägers, IMCC, zu erhalten, die als Nahrungsquelle für die vorgewählten Raubmilben- und/oder Insektenarten verwendet werden soll.

10. Verfahren gemäß Anspruch 9, welches ferner die Schritte umfasst:
f. Mischen der MCC- oder IMCC-Mischung mit einer Population von Raubmilben oder Insekten, die in der Lage sind, die Beutemilbenart zu jagen;
g. Aufzüchten der Raubpopulation auf der MCC- oder IMCC-Mischung über einen vorbestimmten Zeitraum, um ein Aufzuchtprodukt zu erhalten;
h. wahlweise Mischen des Aufzuchtprodukts mit einem Trägermaterial; und
i. Verpacken des Aufzuchtprodukts aus Schritt (g) oder der Mischung aus Schritt (h) in vorbestimmten Mengen und/oder Konzentrationen.

11. Verfahren nach einem der Ansprüche 9 und 10, wobei das Verfahren ferner Schritte umfasst:
a. Trennen von jugendlichen Entwicklungsstadien, wie Larven und/oder Nymphen oder einer Kombination dieser jugendlichen Entwicklungsstadien, zusammen mit Eiern von der vorab ausgewählten Beutezuchtpopulation;
b. Vermischen der abgetrennten jugendlichen Entwicklungsstadien, wie Larven und/oder Nymphen oder einer Kombination dieser jugendlichen Entwicklungsstadien zusammen mit Eiern, mit Partikeln eines Trägermaterials, wie beispielsweise einem Trägermaterial, ausgewählt unter Partikeln aus Sägemehl, Weizenkleie, Buchweizenschalen, Reisschalen oder Hirseschalen oder einer Mischung davon, sowie mit Wasser, um das Trägermaterial im Wesentlichen mit den Beutemilbenindividuen zu beschichten, sodass eine Mischung eines mit Milben beschichteten Trägers, MCC, im Sinne eines der Ansprüche 1-8 entsteht;
c. Einfrieren der Mischung aus Schritt (b); und
d. Aufzucht der Raubmilben- oder Insektenindividuen auf der Mischung als Nahrungsquelle.

12. Aufzuchtzusammensetzung, welche eine Population von Raubmilben und/oder Insekten zusammen mit der Nahrungsquelle gemäß einem der Ansprüche 1-8 umfasst,
vorzugsweise worin die Nahrungsquelle immobilisierte Astigmatiden-Beutearten, insbesondere eine *Carpoglyphus*-Art, umfasst, deren Lebensstadien überwiegend aus Eiern und Larven und/oder Nymphen bestehen, so dass die Partikel des Trägermaterials mit den immobilisierten, vorzugsweise gefrorenen Lebensstadien der Milben beschichtet sind.

13. Zusammensetzung, welche eine Population von Raubmilben und/oder Insekten und eine Nahrungsquelle gemäß einem der Ansprüche 1-8 umfasst, wobei die Population von Raubmilben oder Insekten in der Lage ist, die Nahrungsquelle zu bejagen.

14. Verfahren zur Aufzucht von Raubmilben- oder Insektenindividuen, wobei das Verfahren das Bereitstellen einer Zusammensetzung gemäß Anspruch 13 oder einer Zusammensetzung gemäß Anspruch 12 und das Ermöglichen umfasst, dass die Raubmilben- oder Insektenindividuen die Nahrungsquelle bejagen.

15. Vorrichtung zum Aufnehmen und Freisetzen von Raubmilben- oder Insektenindividuen, umfassend eine Aufzuchtzusammensetzung gemäß Anspruch 12 oder eine Zusammensetzung gemäß Anspruch 13, worin die Vorrichtung einen Ausgang für mobile Lebensstadien von Raubmilben- oder Insektenarten umfasst, vorzugsweise einen Ausgang, der geeignet ist, eine anhaltende Freisetzung einer Anzahl mobiler Lebensstadien zu ermöglichen.

16. Verwendung einer Aufzuchtzusammensetzung gemäß Anspruch 12 oder einer Zusammensetzung gemäß Anspruch 13, vorzugsweise in einer Vorrichtung gemäß Anspruch 15, zum Schutz von Kulturpflanzen vor Schädlingen.

## Revendications

1. Source alimentaire pour acariens et/ou insectes prédateurs, comprenant un mélange de particules d'un matériau support et d'individus d'au moins une espèce d'acariens pouvant servir de proies auxdits acariens et/ou insectes prédateurs, **caractérisée en ce que** ledit mélange est formulé sous la forme d'un support enrobé d'acariens, MCC, de telle sorte qu'au moins 50% de la surface formée par les particules de matériau support soit recouverte par lesdits individus proies, les individus de ladite au moins une espèce d'acariens n'étant pas exclusivement des œufs de celle-ci.

2. Source alimentaire selon la revendication 1, dans laquelle au moins une partie desdits individus proies est immobilisée pour former un mélange MCC immobilisé, IMCC.

3. Source alimentaire selon la revendication 1, dans laquelle ladite source alimentaire comprend des œufs, ou des stades de développement mobiles, ou une combinaison de ceux-ci; et/ou
dans laquelle lesdites particules de matériau support sont choisies parmi le groupe constitué de particules de sciure de bois, de vermiculite, de son, de son de blé, de cosses de sarrasin, de cosses de riz ou de cosses de millet, ou comprenant un mélange de celles-ci, ou de toute autre particule de matériau support inerte présentant des surfaces auxquelles les acariens peuvent adhérer.

4. Source alimentaire selon la revendication 3, dans laquelle au moins l'une des conditions suivantes est remplie:
a. lesdits œufs représentent au moins 50%, par exemple au moins 60%, au moins 70%, au moins 80%, au moins 90% du nombre total d'individus proies; et
b. lesdits stades de développement mobiles des proies représentent une proportion comprise entre 1-50%, de préférence entre 2-25%, et plus préférablement entre 2-15% du nombre total d'individus proies.

5. Source alimentaire selon la revendication 1, dans laquelle ladite espèce d'acarien prédateur est choisie parmi l'ordre des Mesostigmata, par exemple parmi au moins une famille choisie parmi les Phytoseiidae, les Laelapidae, les Blattisociidae, les Ascidae, les Rhodocaridae et les Parasitidae, ou parmi l'ordre des Trombidiformes, par exemple parmi le sous-ordre des Prostigmata, notamment la famille des Anystidae ou des Cheyletidae,
dans laquelle ladite espèce d'acarien prédateur est choisie parmi la famille des Phytoseiidae, notamment parmi les sous-familles des Amblyseiinae, des Phytoseiinae et des Typhlodrominae,
dans laquelle ladite espèce d'acarien prédateur est choisie parmi le groupe constitué du genre *Amblyseius*, tels que *Amblyseius swirskii*, le genre *Neoseiulus*, tels que *Neoseiulus californicus* et *Neoseiulus cucumeris*, le genre *Amblydromalus*, tels que *Amblydromalus limonicus*, le genre *Transeius* tels que *Transeius montdorensis,* et le genre *Phytoseiulus*, tels que *Phytoseiulus persimilis*, ou
dans laquelle ladite espèce d'acarien prédateur est choisie parmi les espèces d'acariens mésostigmatidés, telles que celles appartenant à:
i) la famille des Phytoseiidae, notamment la sous-famille des Amblyseiinae, notamment le genre *Amblyseius*, par exemple *Amblyseius andersoni, Amblyseius aerialis, Amblyseius swirskii, Amblyseius herbicolus* ou *Amblyseius largoensis*, du genre *Euseius* par exemple *Euseius finlandicus, Euseius hibisci, Euseius ovalis, Euseius victoriensis, Euseius stipulatus, Euseius scutalis, Euseius tularensis, Euseius addoensis, Euseius concordis, Euseius ho* ou *Euseius citri*, du genre *Neoseiulus* par exemple *Neoseiulus barkeri, Neoseiulus califormicus, Neoseiulus cucumeris, Neoseiulus longispinosus, Neoseiulus womersleyi, Neoseiulus idaeus, Neoseiulus anonymus, Neoseiulus paspalivorus, Neoseiulus reductus* ou *Neoseiulus fallacis*, du genre *Amblydromalus* par exemple *Amblydromalus limonicus* du genre *Typhlodromalus* par exemple *Typhlodromalus aripo, Typhlodromalus laila* ou *Typhlodromalus peregrinus* du genre *Typhlodromips* par exemple *Typhlodromips montdorensis*, du genre *Phytoseiulus*, par exemple *Phytoseiulus persimilis, Phytoseiulus macropilis, Phytoseiulus longipes, Phytoseiulus fragariae;* la sous-famille des de la Typhlodrominae, tels que du genre *Galendromus* par exemple *Galendromus occidentalis*, du genre *Typhlodromus* par exemple *Typhlodromus pyri, Typhlodromus doreenae* ou *Typhlodromus athiasae;*
ii) Ascidae tels que du genre *Proctolaelaps*, tels que *Proctolaelaps pygmaeus* (Muller); du genre *Blattisocius* par exemple *Blattisocius tarsalis* (Berlese), *Blattisocius keegani* (Fox); du genre *Lasioseius* par exemple *Lasioseius fimetorum* Karg, *Lasioseius floridensis* Berlese, *Lasioseius bispinosus* Evans, *Lasioseius dentatus* Fox, *Lasioseius scapulatus* (Kenett), *Lasioseius athiasae* Nawar & Nasr; du genre *Arctoseius* par exemple *Arctoseius semiscissus* (Berlese); du genre *Protogamasellus* par exemple *Protogamasellus dioscorus* Manson;
iii) Laelapidae tels que du genre *Stratiolaelaps* par exemple *Stratiolaelaps scimitus* (Womersley) (également classé dans le genre *Hypoaspis*); *Geolaelaps* par exemple *Geolaelaps aculeifer* (Canestrini) (également classé dans le genre *Hypoaspis*); *Androlaelaps* par exemple *Androlaelaps casalis* (Berlese);
iv) Macrochelidae tels que du genre *Macrocheles* par exemple *Macrocheles robustulus* (Berlese), *Macrocheles muscaedomesticae* (Scopoli), *Macrocheles matrius* (Hull);
v) Parasitidae tels que du genre *Pergamasus* par exemple *Pergamasus quisquiliarum* Canestrini; *Parasitus* par exemple *Parasitus fimetorum* (Berlese), *Parasitus bituberosus* Karg;
vi) Espèces d'acariens de Prostigmatidae tels que de: Tydeidae tels que du genre *Homeopronematus* par exemple *Homeopronematus anconai* (Baker); du genre *Tydeus* par exemple *Tydeus lambi* (Baker), *Tydeus caudatus* (Dugés); du genre *Pronematus* par exemple *Pronematus ubiquitous* (McGregor); Cheyletidae tels que du genre *Cheyletus* par exemple *Cheyletus eruditus* (Schrank), *Cheyletus malaccensis* Oudemans; Cunaxidae tels que du genre *Coleoscirus* par exemple *Coleoscirus simplex* (Ewing), du genre *Cunaxa* par exemple *Cunaxa setirostris* (Hermann); Erythraeidae tels que du genre *Balaustium* par exemple *Balaustium putmani* Smiley, *Balaustium medicagoense* Meyer & Ryke, *Balaustium murorum* (Hermann); Stigmaeidae tels que du genre *Agistemus* par exemple *Agistemus exsertus* Gonzalez; tels que du genre *Zetzellia* par exemple *Zetzellia mali* (Ewing).

6. Source alimentaire selon la revendication 1, dans laquelle au moins l'une des conditions suivantes est remplie:
a. ladite espèce d'insecte prédateur est choisie parmi l'ordrer i) Coleoptera, tels que la famille des Coccinelidae, par exemple *Stethorus punctillum*, ii) Heteroptera, tels que la famille des Anthocoridae, par exemple *Orius laevigatus*, la famille des Miridae, par exemple *Nesidiocoris tenuis* et *Macrolophus pygmaeus*, iii) Neuroptera tels que la famille des Chrysopidae, par exemple *Chrysoperla carnea*, iv) Thysanoptera, tels que la famille des Thripidae par exemple *Scolothrips sexmaculatus*, v) Diptera, tels que la famille des Syrphidae, par exemple *Episyrphus balteatus*, et vi) Mantodea, tels que la famille des Mantidae (les Mantidés); et
b. dans laquelle ladite au moins une espèce proie est un acarien non tétranychidé, tel qu'une espèce d'acarien appartenant à l'ordre des Astigmata.

7. Source alimentaire selon la revendication 6, dans laquelle ladite espèce proie appartenant à l'ordre des Astigmata est au moins l'une des suivantes:
a. choisie parmi les membres de la famille des Acaridae, Carpoglyphidae, Glycyphagidae, et/ou de la famille des Chortoglyphagidae;
b. choisie parmi les membres d'un genre tels que *Acarus*, *Tyrophagus*, *Aleuroglyphus*, *Lardoglyphus*, *Caloglyphus*, *Suidasia*, *Thyreophagus*, *Carpoglyphus*, *Glycyphagus*, *Lepidoglyphus*, *Blomia*, et/ou *Chortoglyphus*;
c. choisie parmi: *Acarus siro, Acarus farris, Acarus immobilis, Acarus chaetoxysilos, Tyrophagus longior, Tyrophagus similis, Tyrophagus putrescentiae, Tyrophagus communis*, *Aleuroglyphus ovatus, Lardoglyphus konoi, Caloglyphus mycophagus, Suidasia nesbitti, Thyreophagus entomophagus, Carpoglyphus lactis, Carpoglyphus munroi, Glycyphagus domesticus, Lepidoglyphus destructor, Blomia freeman*, *Blomia tropicalis* et/ou *Chortoglyphus arcuatus*; et
d. choisi parmi:
i) Carpoglyphidae tels que du genre *Carpoglyphus* par exemple *Carpoglyphus lactis*;
ii) Pyroglyphidae tels que du genre *Dermatophagoides* par exemple *Dermatophagoides pteronysinus*, *Dermatophagoides 60reema*; du genre *Euroglyphus* par exemple *Euroglyphus longior, Euroglyphus maynei*; du genre *Pyroglyphus* par exemple *Pyroglyphus africanus*;
iii) Glycyphagidae tels que de la sous-famille des *Ctenoglyphinae,* tels que du genre *Diamesoglyphus* par exemple *Diamesoglyphus intermedius*or du genre *Ctenoglyphus*, par exemple *Ctenoglyphus plumiger, Ctenoglyphus canestrinii, Ctenoglyphus palmifer;* la sous-famille des *Glycyphaginae*, tels que du genre *Blomia*, par exemple *Blomia 60reeman* ou du genre *Glycyphagus*, par exemple *Glycyphagus ornatus, Glycyphagus bicaudatus, Glycyphagus privatus, Glycyphagus domesticus,* ou du genre *Lepidoglyphus* par exemple *Lepidoglyphus michaeli, Lepidoglyphus fustifer, Lepidoglyphus destructor,* ou du genre *Austroglycyphagus*, par exemple *Austroglycyphagus geniculatus;* de la sous-famille des *Aëroglyphinae,* tels que du genre *Aëroglyphus*, par exemple *Aëroglyphus robustus*; de la sous-famille des *Labidophorinae,* tels que du genre *Gohieria*, par exemple *Gohieria fusca;* ou de la sous-famille des *Nycteriglyphinae* tels que du genre *Coproglyphus*, par exemple *Coproglyphus stammeri* ou de la sous-famille des *Chortoglyphidae,* tels que le genre *Chortoglyphus* par exemple *Chortoglyphus arcuatus* et de préférence choisie parmi la sous-famille des *Glycyphaginae*, de préférence choisie du genre *Glycyphagus* ou le genre *Lepidoglyphus* de préférence encore choisie parmi *Glycyphagus domesticus* ou *Lepidoglyphus destructor*;
iv) Acaridae tels que du genre *Tyrophagus* par exemple *Tyrophagus putrescentiae*, *Tyrophagus tropicus*, *Tyrophagus communis* du genre *Acarus* par exemple *Acarus siro*, *Acarus farris, Acarus gracilis*; du genre *Lardoglyphus* par exemple *Lardoglyphus konoi,* du genre *Thyreophagus,* tels que *Thyreophagus entomophagus*; du genre *Aleuroglyphus,* par exemple *Aleuroglyphus ovatus;*
v) Suidasiidae tels que du genre *Suidasia*, tels que *Suidasia nesbiti, Suidasia pontifica* ou *Suidasia medanensis.*

8. Source alimentaire selon l'une quelconque des revendications 1-7, dans laquelle ladite source alimentaire est au moins l'un des éléments suivants:
a. comprenant en outre des acariens proies, vivants ou morts, sous une forme non-MCC ou non-IMCC; et
b. contenue dans un récipient tel qu'un sachet, une bouteille ou tout autre type de récipient ou dispositif d'emballage conçu pour contenir la source alimentaire, avec ou sans population d'acariens ou d'insectes prédateurs se nourrissant de ladite source alimentaire.

9. Procédé de production d'une source alimentaire pour acariens et/ou insectes prédateurs, selon l'une quelconque des revendications 1-8, dans lequel le procédé comprend les étapes suivantes:
a. fournir une population d'élevage d'au moins une espèce d'acarien pouvant servir de proie à une espèce prédatrice présélectionnée d'acarien ou d'insecte, ladite population d'élevage comprenant des individus de ladite au moins une espèce de proie, de préférence accompagnés d'une source nutritive appropriée pour les individus de l'acarien-proie;
b. obtenir au moins une fraction correspondant à un stade de développement présélectionné de ladite population de proies à l'aide de moyens de séparation;
c. mélanger la fraction obtenue avec des particules d'un matériau support (par exemple de la sciure de bois) et avec de l'eau, de sorte que les acariens proies recouvrent essentiellement au moins 50% de la surface formée par les particules du matériau support afin de former un mélange de type « support recouvert d'acariens » (MCC);
d. sécher ledit mélange de type MCC;
e. éventuellement, immobiliser au moins une partie desdits acariens pour obtenir un mélange de support recouvert d'acariens immobilisés, IMCC, destiné à servir de source alimentaire auxdites espèces prédatrices présélectionnées d'acariens et/ou d'insectes.

10. Procédé selon la revendication 9, comprenant en outre les étapes suivantes:
f. mélanger ledit mélange de MCC ou d'IMCC avec une population d'acariens prédateurs ou d'insectes prédateurs capables de se nourrir desdites espèces d'acariens proies;
g. élever ladite population prédatrice sur ledit mélange de MCC ou d'IMCC pendant une durée prédéterminée afin d'obtenir un produit d'élevage;
h. éventuellement, mélanger ledit produit d'élevage avec un matériau support; et
i. conditionner ledit produit d'élevage de l'étape (g) ou ledit mélange de l'étape (h) en quantités et/ou en concentrations prédéterminées.

11. Procédé selon l'une quelconque des revendications 9 et 10, dans lequel le procédé comprend en outre les étapes consistant à:
a. séparer les stades de développement juvéniles, tels que les larves et/ou les nymphes, ou une combinaison desdits stades de développement juvéniles ainsi que les œufs, de la population d'élevage de proies présélectionnée;
b. mélanger des stades juvéniles de développement séparés, tels que des larves et/ou des nymphes ou une combinaison desdits stades juvéniles de développement ainsi que des œufs, avec des particules de matériau support, telles qu'un matériau support choisi parmi des particules de sciure de bois, de son de blé, de cosses de sarrasin, de cosses de riz ou de cosses de millet, ou comprenant un mélange de celles-ci, et de l'eau, de manière à enrober essentiellement le matériau support avec les individus d'acariens proies afin de former un mélange de type support enrobé d'acariens, MCC, tel que défini dans l'une quelconque des revendications 1-8;
c. congeler le mélange de l'étape (b); et
d. élever les acariens prédateurs ou les insectes sur le mélange en tant que source alimentaire.

12. Composition d'élevage comprenant une population d'acariens prédateurs et/ou d'insectes, ainsi que la source alimentaire selon l'une quelconque des revendications 1-8,
dans laquelle, de préférence, la source alimentaire comprend des espèces proies d'Astigmatidae immobilisées, en particulier une espèce du genre *Carpoglyphus*, dont les stades de développement comprennent principalement des œufs, des larves et/ou des nymphes, de telle sorte que lesdites particules de matériau support soient recouvertes par lesdits stades de développement des acariens immobilisés, de préférence congelés.

13. Composition comprenant une population d'acariens et/ou d'insectes prédateurs et une source alimentaire selon l'une quelconque des revendications 1-8, dans laquelle ladite population d'acariens ou d'insectes prédateurs est capable de se nourrir de ladite source alimentaire.

14. Procédé d'élevage d'individus d'acariens ou d'insectes prédateurs, ledit procédé comprenant la mise à disposition d'une composition selon la revendication 13, ou d'une composition selon la revendication 12, et le fait de permettre aux individus d'acariens ou d'insectes prédateurs de se nourrir de la source alimentaire.

15. Dispositif destiné à contenir et à libérer des acariens ou des insectes prédateurs, comprenant une composition d'élevage selon la revendication 12 ou une composition selon la revendication 13, dans lequel le dispositif comprend une sortie pour les stades de développement mobiles d'espèces d'acariens ou d'insectes prédateurs, de préférence une sortie adaptée pour permettre une libération prolongée d'un certain nombre de stades de développement mobiles.

16. Utilisation d'une composition d'élevage selon la revendication 12 ou d'une composition selon la revendication 13, de préférence dans un dispositif selon la revendication 15, pour la protection des cultures contre les ravageurs.
